# EUROPEAN PATENT APPLICATION

(11) **EP 4 633 265 A1**
(43) Date of publication of application: **15.10.2025**
(21) Application number: 23909320.6
(22) Date of filing: 07.09.2023
(51) Int. Cl.: H04W 72/0446

(54) **DELAY INFORMATION MANAGEMENT METHOD AND RELATED APPARATUS**

(30) Priority: 29.12.2022 CN 202211711911
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Thun, Clemens
(86) International application number: PCT/CN2023/117575
(87) International publication number: WO 2024/139382

(57) **Abstract**

This application provides a delay information management method and a related apparatus, and relates to the wireless communication field. The method includes: obtaining first delay information of a first granularity, and reporting the first delay information. The first delay information is used for indicating a remaining sending delay of the first granularity or a remaining sending delay of a data packet of the first granularity. In this way, an access network device can sense remaining delay information of a specified service on a terminal, to allocate a resource to data with a small remaining delay in a timely manner, so that the data can be transmitted to the access network device within a required delay range.

## Description

This application claims priority to Chinese Patent Application No. 202211711911.6, filed with the China National Intellectual Property Administration on December 29, 2022 and entitled "DELAY INFORMATION MANAGEMENT METHOD AND RELATED APPARATUS", which is incorporated herein by reference in its entirety.

### TECHNICAL FIELD

This application relates to the wireless communication field, and in particular, to a delay information management method and a related apparatus.

### BACKGROUND

With development of technologies in the wireless communication field, specified services (for example, extended reality and cloud gaming) impose increasingly strict requirements on a delay. The extended reality (eXtended Reality, XR) service is used as an example. The XR service has a large amount of burst data and has a strict requirement on a delay, and therefore requires a low delay and a high throughput. To be specific, in the XR service, data needs to be successfully transmitted within a determined required delay range. If data cannot be successfully transmitted within the required delay range, the data is discarded. Consequently, a service capacity is reduced.

To increase the service capacity so that data can be successfully transmitted within the required delay range, an access network device may sense remaining delay information of the XR service on a terminal, to allocate a resource to data with a small remaining delay in a timely manner, so that the data can be transmitted to the access network device. However, how to determine a remaining delay of data in the XR service has become a problem that urgently needs to be resolved currently.

### SUMMARY

This application provides a delay information management method and a related apparatus, to determine remaining delay information of data in a specified service (for example, an XR service or a cloud gaming service). In this way, an access network device can sense remaining delay information of a specified service on a terminal, to allocate a resource to data with a small remaining delay in a timely manner, so that the data can be transmitted to the access network device within a required delay range.

According to a first aspect, this application provides a delay information management method, including: obtaining first delay information of a first granularity, where the first delay information is determined based on a first threshold and a first parameter, and the first parameter is related to delay information of a data packet of the first granularity; or the first delay information is determined based on a second parameter, and the second parameter is related to delay information of a data packet of the first granularity.

In a possible implementation, the first delay information is used for indicating a remaining sending delay of the first granularity. The first threshold may be obtained by a transmit end through a higher layer or an application layer, or may be received by a transmit end and sent by a receive end, or may be configured by a core network through network attached storage NAS signaling.

In a possible implementation, the first parameter includes at least one of the following: delay information of each data packet of the first granularity; delay information of an earliest-arriving data packet of the first granularity; delay information of a start data packet of the first granularity; delay information of an end data packet of the first granularity; delay information of at least one data packet of the first granularity; a maximum value of delay information of data packets of the first granularity; delay information of any data packet of the first granularity; an average value of delay information of data packets of the first granularity; a maximum value of delay information of an earliest-arriving data packet of the first granularity; a maximum value of a plurality of pieces of maximum delay information of the first granularity; a maximum value of a plurality of pieces of any delay information of the first granularity; or a maximum value of a plurality of pieces of average delay information of the first granularity.

In a possible implementation, the delay information of the data packet of the first granularity may be used for indicating cache duration or maintenance duration of the data packet at a protocol layer.

In a possible implementation, the second parameter includes at least one of the following: average remaining delay information of the first granularity; minimum remaining delay information of the first granularity; any remaining delay information of the first granularity; a median of a plurality of pieces of remaining delay information of the first granularity; a minimum value of average remaining delay information of the first granularity; a minimum value of minimum remaining delay information of the first granularity; or a minimum value of any remaining delay information of the first granularity.

In a possible implementation, the remaining delay information is used for indicating a remaining sending delay of the data packet of the first granularity.

In a possible implementation, the first delay information is at least one of the following: a minimum value obtained by subtracting the first parameter from the first threshold; an average value obtained by subtracting the first parameter from the first threshold; a maximum value obtained by subtracting the first parameter from the first threshold; any value obtained by subtracting the first parameter from the first threshold; the first threshold minus the first parameter; or the second parameter.

In a possible implementation, the method further includes: starting a first timer after the data packet of the first granularity is received and before the first delay information of the first granularity is obtained.

In a possible implementation, the first timer is configured to record cache duration or maintenance duration of a corresponding data packet at a protocol layer.

In a possible implementation, the method further includes: learning that transmission of the data packet is completed or segmented transmission of the data packet is completed; or obtaining second indication information, where the second indication information is used for indicating transmission of timer duration of the data packet of the first granularity, or indicating triggering of reporting of delay information; or triggering reporting of delay information; and stopping the first timer corresponding to the data packet.

In a possible implementation, the stopping the first timer corresponding to the data packet includes: no longer maintaining the first timer corresponding to the data packet, where the first timer for the data packet no longer performs counting.

In a possible implementation, before the first delay information of the first granularity is obtained, whether the first timer for the data packet of the first granularity is running is determined. When the first timer is running, delay information of the data packet corresponding to the first timer is obtained. When the first timer is stopped, no delay information of the data packet corresponding to the first timer is obtained.

In a possible implementation, the learning that transmission of the data packet is completed or segmented transmission of the data packet is completed specifically includes at least one of the following: learning that the data packet has been transmitted; learning that the data packet has been sent; learning that the data packet is successfully transmitted; learning that at least one piece of segmented data of the data packet has been transmitted; learning that at least one piece of segmented data of the data packet has been sent; or learning that at least one piece of segmented data of the data packet is successfully transmitted.

In a possible implementation, the having been transmitted means having been transmitted to a lower layer, the having been sent means having been sent to the receive end, and the being successfully transmitted means being successful transmitted to the receive end.

In a possible implementation, the method further includes: transmitting the first delay information, or transmitting the first delay information and first granularity information.

In a possible implementation, the first granularity information includes an identifier corresponding to the first granularity, and the first granularity information is used for indicating the first granularity.

In a possible implementation, the method further includes: determining whether a first uplink resource used for reporting first indication information is obtained, where the first indication information is used for indicating an identifier corresponding to a value or a value range of second delay information, and the second delay information is determined based on the first delay information, or is determined based on the first delay information and a waiting delay of the first uplink resource; and reporting the first indication information when it is determined that the first uplink resource is obtained.

In a possible implementation, the second delay information is used for indicating a remaining sending delay of the first granularity.

In a possible implementation, the method further includes: reporting the first indication information when it is determined that the first uplink resource is obtained.

In a possible implementation, the data packet of the first granularity includes at least one of the following: a protocol data unit PDU; or a service data unit SDU.

In a possible implementation, the method further includes: starting a second timer after the data packet of the first granularity is received.

In a possible implementation, the second timer is configured to record cache duration or maintenance duration of a corresponding data packet at a protocol layer.

In a possible implementation, duration of the first timer corresponding to a first data packet and/or duration of the second timer corresponding to the first data packet are/is obtained; and the duration of the first timer for the first data packet is transmitted, or the duration of the first timer for the first data packet and the duration of the second timer for the first data packet are transmitted.

In a possible implementation, the method further includes: when a first condition is met, obtaining the duration of the first timer corresponding to the first data packet and/or the duration of the second timer corresponding to the first data packet, where the first condition includes at least one of the following: the first data packet has been transmitted; second indication information is obtained, where the second indication information is used for indicating transmission of timer duration of the first data packet, or indicating triggering of reporting of delay information; or reporting of delay information is triggered.

In a possible implementation, the method further includes: obtaining delay information of the first data packet, where the delay information of the first data packet is determined based on the duration of the first timer for the first data packet and the duration of the second timer for the first data packet.

In a possible implementation, the delay information of the first data packet may be used for indicating cache duration or maintenance duration of the data packet at a protocol layer.

In a possible implementation, the method further includes: when a second condition is met, deleting duration of a timer corresponding to the first data packet, or stopping a timer corresponding to the first data packet, where the second condition includes one or more of the following: it is learned that the first data packet has been transmitted; it is learned that the first data packet has been sent; it is learned that the first data packet is successfully transmitted; it is learned that at least one piece of segmented data of the first data packet has been transmitted; it is learned that at least one piece of segmented data of the first data packet has been sent; it is learned that at least one piece of segmented data of the first data packet is successfully transmitted; or it is learned that the duration of the timer corresponding to the first data packet has been transmitted.

According to a second aspect, this application provides a delay information management method, including: obtaining first delay information of a first granularity, where the first delay information is determined based on first time information and second time information, the first time information is determined based on timestamp information of arrival of a data packet of the first granularity, and the second time information is current timestamp information; or the first delay information is first time information.

In a possible implementation, the first delay information is used for indicating a remaining sending delay of the first granularity.

In a possible implementation, that the first time information is determined based on a timestamp of arrival of a data packet of the first granularity is specifically at least one of the following: the first time information is determined based on a timestamp of an earliest-arriving data packet of the first granularity; the first time information is determined based on a timestamp of each data packet of the first granularity; the first time information is determined based on a timestamp of any data packet of the first granularity; the first time information is determined based on an earliest timestamp of a data packet of the first granularity; the first time information is determined based on any timestamp of a data packet of the first granularity; the first time information is determined based on a median of timestamps of data packets of the first granularity; the first time information is determined based on a timestamp of a start data packet of the first granularity; the first time information is determined based on a timestamp of an end data packet of the first granularity; or the first time information is determined based on an average value of timestamps of all data packets of the first granularity.

In a possible implementation, the method further includes: after the data packet of the first granularity is received, recording a timestamp of the data packet.

In a possible implementation, the method further includes: transmitting the timestamp corresponding to the data packet.

In a possible implementation, the first time information includes at least one of the following: a system frame number, subframe information, slot information, and symbol information.

In a possible implementation, the method further includes: learning that transmission of the data packet is completed or segmented transmission of the data packet is completed; and deleting or discarding the timestamp corresponding to the data packet.

In a possible implementation, the learning that transmission of the data packet is completed or segmented transmission of the data packet is completed specifically includes at least one of the following: learning that the data packet has been transmitted; learning that the data packet has been sent; learning that the data packet is successfully transmitted; learning that at least one piece of segmented data of the data packet has been transmitted; learning that at least one piece of segmented data of the data packet has been sent; or learning that at least one piece of segmented data of the data packet is successfully transmitted.

In a possible implementation, the having been transmitted means having been transmitted to a lower layer, the having been sent means having been sent to a receive end, and the being successfully transmitted means being successful transmitted to the receive end.

According to a third aspect, an embodiment of this application provides an indication information transmission method, including: indicating first information when it is learned that transmission of a data packet of a first granularity is completed, where the first information is used for indicating at least one of the following information: that transmission of the data packet is completed; stopping a timer corresponding to the data packet; or deleting or discarding a timestamp corresponding to the data packet.

In a possible implementation, the stopping the first timer corresponding to the data packet includes: no longer maintaining the timer corresponding to the data packet.

In a possible implementation, the indicating first information when it is learned that transmission of a data packet of a first granularity is completed specifically includes at least one of the following: indicating the first information when it is learned that the data packet has been transmitted; indicating the first information when it is learned that the data packet has been sent; indicating the first information when it is learned that the data packet is successfully transmitted; indicating the first information when it is learned that at least one piece of segmented data of the data packet has been transmitted; indicating the first information when it is learned that at least one piece of segmented data of the data packet has been sent; or indicating the first information when it is learned that at least one piece of segmented data of the data packet is successfully transmitted.

In a possible implementation, the having been transmitted means having been transmitted to a lower layer, the having been sent means having been sent to a receive end, and the being successfully transmitted means being successful transmitted to the receive end.

According to a fourth aspect, an embodiment of this application provides a delay information sending method, including: learning whether a first uplink resource is available for sending first indication information; and sending or obtaining the first indication information when the first uplink resource is obtained and a result of a logical channel priority is met, where the first indication information is used for indicating delay information of a second granularity, the delay information includes second delay information of a first granularity or first time information of the first granularity, and the first indication information indicates at least one of the following: a value of the second delay information, a value of the first time information, a value range of the second delay information, or a value range of the first time information.

In a possible implementation, the second delay information is used for indicating a remaining sending delay of the first granularity.

In a possible implementation, the first time information is determined based on a timestamp of arrival of a data packet of the first granularity.

In a possible implementation, the second granularity corresponds to at least one piece of delay information.

In a possible implementation, the first granularity may be equal to the second granularity, or the first granularity may not be equal to the second granularity. When the first granularity is not equal to the second granularity, the second granularity includes the first granularity.

In a possible implementation, the second delay information is determined based on the first delay information, or is determined based on the first delay information and a waiting delay of the first uplink resource, or is determined based on the first time information and a timestamp at which the first uplink resource is obtained.

In a possible implementation, the first delay information may be the same as the first delay information, or may be different from the second delay information.

In a possible implementation, the second granularity includes at least one of the following: a radio link control protocol layer RLC entity, an RLC entity group including a plurality of RLC entities, a logical channel LCH, an LCH group including a plurality of LCHs, a PDU set, and a data burst data burst.

In a possible implementation, when the second granularity is an RLC entity, the first granularity includes at least one of the following: an LCH, a data burst, and a PDU set; when the second granularity is a data burst, the first granularity includes a PDU set; when the second granularity is an LCH, the first granularity includes at least one of the following: a data burst and a PDU set; when the second granularity is an RLC entity group, the first granularity includes at least one of the following: an RLC entity, an LCH, a data burst, and a PDU set; or when the second granularity is an LCH group, the first granularity includes at least one of the following: an LCH, a data burst, and a PDU set.

In a possible implementation, the first indication information further includes: a data format of the first indication information, first granularity information, cache data volume information, a reserved field, and the like, where the data format of the first indication information is identified by a first identifier, and the first identifier is a logical channel identifier LCID, used for identifying a logical channel corresponding to the first indication information.

According to a fifth aspect, an embodiment of this application provides a chip or a chip system, including a processing circuit and an interface circuit. The interface circuit is configured to receive code instructions and transmit the code instructions to the processing circuit. The processing circuit is configured to run the code instructions to perform the method according to any one of the possible implementations of any one of the foregoing aspects.

According to a sixth aspect, an embodiment of this application provides an electronic device, which is user equipment and includes: one or more processors, one or more memories, and a radio frequency transmit channel. The one or more memories are coupled to the one or more processors. The one or more memories are configured to store computer program code. The computer program code includes computer instructions. When the one or more processors execute the computer instructions, the electronic device is enabled to perform the method according to any one of the possible implementations of any one of the foregoing aspects.

According to a seventh aspect, an embodiment of this application provides an electronic device, which is a network device and includes: a processor and a transceiver that is internally connected to and communicates with the processor. The transceiver is configured to receive code instructions and transmit the code instructions to the processor. The processor is configured to run the code instructions to enable the electronic device to perform the method according to any one of the possible implementations of any one of the foregoing aspects.

According to an eighth aspect, an embodiment of this application provides a computer-readable storage medium, including computer instructions. When the computer instructions are run on an electronic device, the electronic device is enabled to perform the method according to any one of the possible implementations of any one of the foregoing aspects.

### BRIEF DESCRIPTION OF DRAWINGS

FIG. 1A is a diagram of a protocol layer structure according to an embodiment of this application;
FIG. 1B is a schematic flowchart of determining first delay information according to an embodiment of this application;
FIG. 1C is a diagram of a specific implementation of a process of determining first delay information according to an embodiment of this application;
FIG. 2A is another schematic flowchart of determining first delay information according to an embodiment of this application;
FIG. 2B is a diagram of another protocol layer structure according to an embodiment of this application;
FIG. 2C is a diagram of another protocol layer structure according to an embodiment of this application;
FIG. 3A is another schematic flowchart of determining first delay information according to an embodiment of this application;
FIG. 3B is a diagram of another protocol layer structure according to an embodiment of this application;
FIG. 3C is a diagram of a specific implementation of another process of determining first delay information according to an embodiment of this application;
FIG. 4A is a schematic flowchart of an indication information transmission method according to an embodiment of this application;
FIG. 4B is a diagram of a specific implementation of a process of an indication information transmission method according to an embodiment of this application;
FIG. 5A is a schematic flowchart of a delay information sending method according to an embodiment of this application;
FIG. 5B is a diagram of a second granularity according to an embodiment of this application;
FIG. 5C is a schematic flowchart of a first indication information sending method according to an embodiment of this application;
FIG. 6A is a diagram of a structure of a communication apparatus 1000 according to an embodiment of this application; and
FIG. 6B is a diagram of a structure of a network apparatus 2000 according to an embodiment of this application.

### DESCRIPTION OF EMBODIMENTS

Terms used in the following embodiments of this application are merely intended to describe specific embodiments, but not to limit this application. As used in this specification and the claims of this application, singular expressions "a", "an", "the", "the foregoing", and "this" are also intended to include plural expressions, unless otherwise expressly specified in the context. It should be further understood that the term "and/or" used in this application means including any or all possible combinations of one or more of listed items. In embodiments of this application, the terms "first" and "second" are merely intended for a purpose of description, and shall not be construed as indicating or implying relative importance or implying a quantity of indicated technical features. Therefore, a feature defined to be "first" or "second" may explicitly or implicitly include one or more features. In the descriptions of embodiments of this application, "a plurality of" means two or more, unless otherwise specified.

To increase a service capacity so that data can be successfully transmitted within a required delay range, this application provides a delay information management method, to determine remaining delay information of data in a specified service (for example, an XR service or a cloud gaming service). **In** this way, an access network device can sense remaining delay information of a specified service on a terminal, to allocate a resource to data with a small remaining delay in a timely manner, so that the data can be transmitted to the access network device within the required delay range. It should be noted that the delay information management method may include a delay information determining method, an indication information sending method, and a delay information sending method.

A granularity described in this application may include at least one of an entity, a protocol layer, a path, a link, a channel, a bearer, and a set.

First, the delay information determining method provided in embodiments of this application is described.

Method 1: Determine first delay information of a first granularity based on delay information of a data packet of the first granularity.

It should be noted that the first delay information is determined based on a first threshold and a first parameter, and the first parameter is related to the delay information of the data packet of the first granularity; or the first delay information is determined based on a second parameter, and the second parameter is related to the delay information of the data packet of the first granularity. The first parameter may correspond to one piece of delay information, or may correspond to a plurality of pieces of delay information.

**In** the method, a first protocol layer and/or a second protocol layer may obtain delay information of one or more data packets of the first granularity. The first protocol layer or the second protocol layer may determine the first parameter from the delay information of the one or more data packets. The first protocol layer or the second protocol layer may determine the first delay information of the first granularity based on the first threshold and the first parameter. Alternatively, the first protocol layer or the second protocol layer may determine the second parameter from the delay information of the one or more data packets, and the first delay information may be determined based on the second parameter. Then the first protocol layer or the second protocol layer may transmit the first delay information, or transmit the first delay information and first granularity information. The transmitting the first delay information may be understood as that the first protocol layer or the second protocol layer sends the first delay information to a next protocol layer. The first granularity information may include an identifier corresponding to the first granularity, and the first granularity information is used for indicating the first granularity.
(1) Delay information of a data packet may be used for indicating cache duration of the data packet at a protocol layer. The protocol layer may be one protocol layer or a plurality of protocol layers.

When the delay information of the data packet indicates cache duration of the data packet at one protocol layer, the cache duration may be understood as follows: a. a difference between time at which the protocol layer receives the data packet and time at which the data packet is transmitted to a next protocol layer; b. a difference between time at which the protocol layer receives the data packet and time at which reporting of delay information is triggered; or c. a difference between time at which the protocol layer receives the data packet and time at which the first delay information is calculated.

When the delay information of the data packet indicates cache duration of the data packet at a plurality of protocol layers, the cache duration may be understood as follows: a. a sum of duration in which the data packet stays at the plurality of protocol layers, where duration of staying at a protocol layer may be duration from time at which the protocol layer receives the data packet to time at which the data packet is transmitted to a next protocol layer; b. a difference between time at which the first protocol layer receives the data packet and time at which reporting of delay information is triggered; c. a difference between time at which the first protocol layer receives the data packet and time at which the first delay information is calculated; or d. a sum of every two of the following three differences: a difference between time at which a protocol layer receives the data packet and time at which the data packet is transmitted to a next protocol layer, a difference between the time at which the protocol layer receives the data packet and time at which reporting of delay information is triggered, and a difference between the time at which the protocol layer receives the data packet and time at which the first delay information is calculated, for example, the difference between the time at which the protocol layer receives the data packet and the time at which the data packet is transmitted to the next protocol layer + the difference between the time at which the protocol layer receives the data packet and the time at which reporting of delay information is triggered = a first value, where the first value is the cache duration.

(2) Delay information of a data packet may alternatively be used for indicating duration in which a protocol layer receiving the data packet maintains the data packet or duration of a timer corresponding to the data packet, where the duration is referred to as maintenance duration for short. The duration in which the data packet is maintained may be understood as duration from time at which the data packet arrives at the protocol layer to time at which the protocol layer obtains first information, or duration from time at which the data packet arrives at the protocol layer to time at which delay information is reported. For descriptions of the first information, refer to subsequent descriptions.

In an implementation, the first delay information is used for indicating a remaining sending delay of the first granularity or a remaining sending delay of the data packet of the first granularity.

In some application scenarios, the first protocol layer and/or the second protocol layer may obtain the delay information of the data packet based on a timer corresponding to the data packet. To be specific, the timer corresponding to the data packet may be used for recording cache duration or maintenance duration of the data packet at a protocol layer. For descriptions of the cache duration or the maintenance duration at the protocol layer, refer to the foregoing descriptions. The following describes two methods for calculating the first delay information.

(A) Obtain delay information of a data packet based on one timer corresponding to the data packet, and determine the first delay information.

(B) Obtain delay information of a data packet based on one or more timers corresponding to the data packet, and determine the first delay information.

(A) Obtain delay information of a data packet based on one timer corresponding to the data packet.

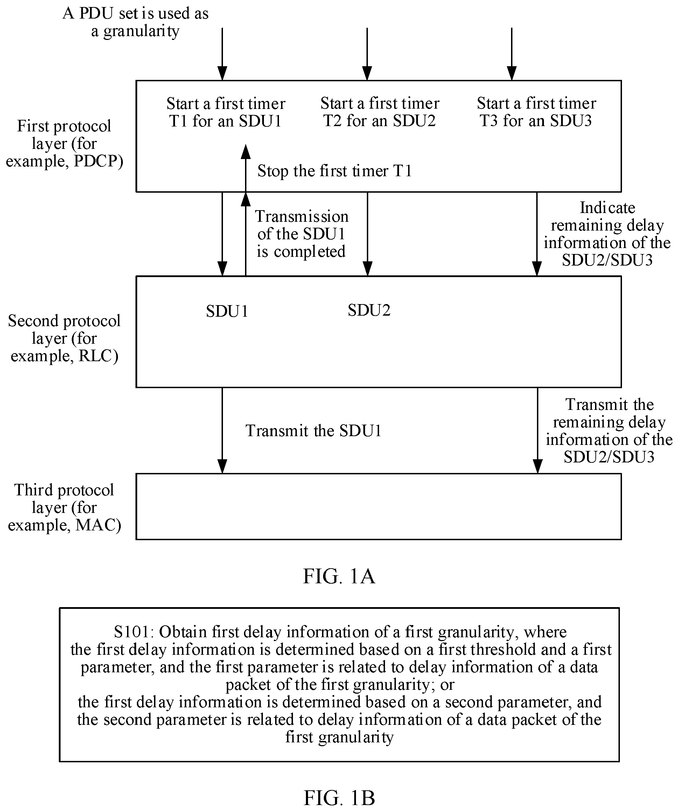

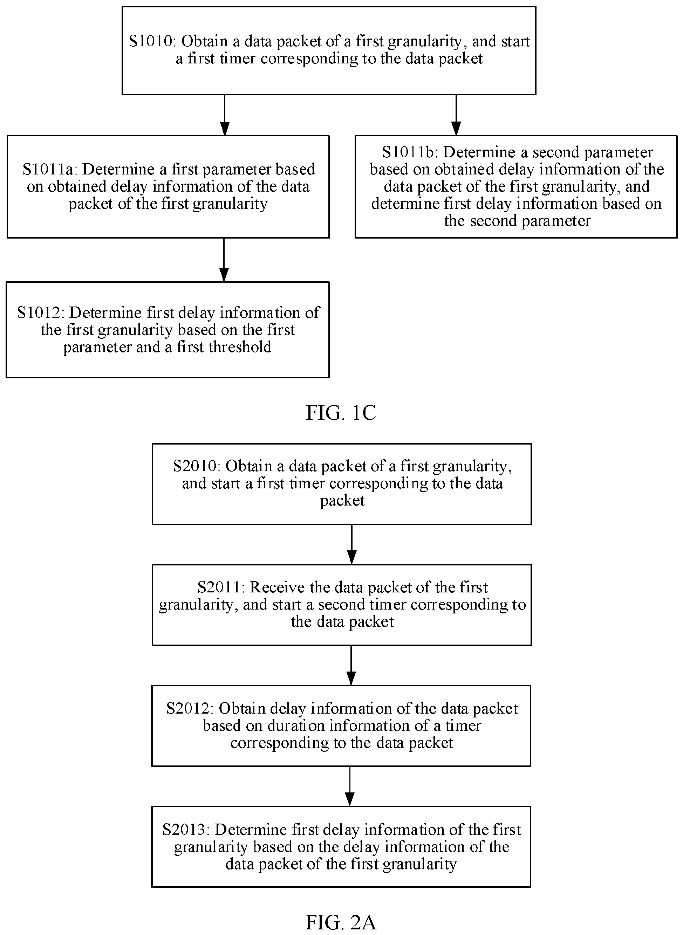

With reference to a diagram of a protocol layer structure shown in FIG. 1A, as shown in FIG. 1B and FIG. 1C, a specific process of the method may include the following steps.

S101: Obtain first delay information of a first granularity, where the first delay information is determined based on a first threshold and a first parameter, and the first parameter is related to delay information of a data packet of the first granularity; or the first delay information is determined based on a second parameter, and the second parameter is related to delay information of a data packet of the first granularity.

Specifically, a first protocol layer may determine the first delay information of the first granularity based on the delay information of the data packet of the first granularity. For the delay information of the data packet, refer to the foregoing descriptions. Details are not described herein again.

In some embodiments, an implementation of this step may be as follows: The first protocol layer obtains a data packet of the first granularity and starts a first timer for the data packet. Then the first protocol layer obtains delay information of the corresponding data packet based on the first timer, and determines the first parameter or the second parameter based on the obtained delay information of the data packet of the first granularity. Then the first protocol layer determines the first delay information of the first granularity based on the first parameter and the first threshold, or based on the second parameter. A specific implementation process may be as follows:

S1010: Obtain a data packet of the first granularity, and start a first timer corresponding to the data packet.

Specifically, the first protocol layer may obtain a data packet of the first granularity. To be specific, the first protocol layer receives a data packet, and the data packet belongs to the first granularity. It should be noted that the first granularity may include at least one data packet. Therefore, the data packet of the first granularity may be one data packet of the first granularity, a plurality of data packets of the first granularity, or all data packets of the first granularity. The first protocol layer may be a service data adaptation protocol (service data adaptation protocol, SDAP) layer, a packet data convergence protocol (packet data convergence protocol, PDCP) layer, a radio link control protocol (radio link control, RLC) layer, or another protocol layer. This is not limited in this application. The first granularity may be an RLC entity, an RLC entity group including a plurality of RLC entities, a logical channel LCH, an LCH group including a plurality of LCHs, a PDU set, and a data burst data burst. Alternatively, the first granularity may be another entity, set, or the like that includes one or more data packets. The data packet of the first granularity may include at least one of the following: a protocol data unit PDU or a service data unit SDU.

After obtaining the data packet of the first granularity, the first protocol layer may start the corresponding first timer for the data packet. The first timer may be configured to obtain delay information of the data packet corresponding to the first timer. To be specific, the first timer may record cache duration or maintenance duration of the data packet corresponding to the first timer at a protocol layer, to subsequently obtain the delay information of the corresponding data packet based on the first timer. The first timer may be started and maintained by the first protocol layer. The maintaining the first timer may be understood as that the first protocol layer keeps the first timer performing counting for cache time or maintenance time of the data packet at the protocol layer.

In a possible implementation, when it is learned that transmission of the data packet is completed or segmented transmission of the data packet is completed, or when second indication information is obtained and the second indication information is used for indicating transmission of timer duration of the data packet of the first granularity, or indicating triggering of reporting of delay information, or when reporting of delay information is triggered, the first timer corresponding to the data packet may be stopped.

A manner of learning that transmission of the data packet is completed or segmented transmission of the data packet is completed includes: (a) The first protocol layer obtains first information. After the first protocol layer obtains the first information, the first information is used for indicating that transmission of the data packet is completed or segmented transmission of the data packet is completed. Stopping a timer corresponding to the data packet may be understood as that a protocol layer no longer maintains the timer corresponding to the data packet. The no longer maintaining the timer corresponding to the data packet may be understood as that the timer corresponding to the data packet no longer performs counting. Therefore, delay information of the corresponding data packet cannot be obtained based on the timer. (b) The first protocol layer may determine that transmission of the data packet is completed or segmented transmission of the data packet is completed.

FIG. 1A is used as an example. The first protocol layer may be a PDCP layer, and the first granularity may be a protocol data unit set (protocol data unit, PDU set). The PDCP layer may obtain a plurality of data packets in the PDU set, for example, data packets SDU1, SDU2, and SDU3. After receiving the data packets SDU1, SDU2, and SDU3, the PDCP layer may start and maintain a first timer T1 for the SDU1, start and maintain a first timer T2 for the SDU2, and start and maintain a first timer T3 for the SDU3. The first timer T1 may record cache duration or maintenance duration of the SDU1 at the protocol layer, to obtain delay information of the SDU1. The first timer T2 may record cache duration or maintenance duration of the SDU2 at the protocol layer, to obtain delay information of the SDU2. The first timer T3 may record cache duration or maintenance duration of the SDU3 at the protocol layer, to obtain delay information of the SDU3.

S1011a: Determine the first parameter based on the obtained delay information of the data packet of the first granularity.

Specifically, the first protocol layer may obtain, based on the first timer started and maintained at the protocol layer, the delay information of the data packet corresponding to the first timer. The obtaining the delay information of the corresponding data packet based on the first timer is that the first protocol layer reads duration information of the first timer. The duration information of the first timer may be understood as on duration of the first timer (which may be referred to as duration of the first timer subsequently). The duration information may also be understood as cache duration or maintenance duration of the corresponding data packet at the protocol layer.

In a possible implementation, before obtaining the delay information of the data packet of the first granularity, the first protocol layer determines whether the first timer for the data packet of the first granularity is running. When the first timer is running, the delay information of the data packet corresponding to the first timer is obtained. When the first timer is stopped, no delay information of the data packet corresponding to the first timer is obtained.

Then the first protocol layer may determine the first parameter based on the delay information of the data packet of the first granularity. The delay information of the data packet of the first granularity may be delay information of one data packet of the first granularity, or may include delay information of each of a plurality of data packets of the first granularity, or may include delay information of each of all data packets of the first granularity. The first parameter is related to the delay information of the data packet of the first granularity. To be specific, before the first parameter is determined, the delay information of the data packet of the first granularity is obtained, and then the first parameter is obtained based on the delay information of the data packet of the first granularity. The first parameter may include at least one of the following:

Delay information of each data packet of the first granularity: This is cache duration or maintenance duration of each data packet of the first granularity, and may also be understood as cache duration or maintenance duration, at the first protocol layer, of each data packet of the first granularity that is received by the protocol layer during calculation of the first delay information.

In a possible implementation, when transmission of the data packet of the first granularity is completed or segmented transmission of the data packet is completed, the delay information of each data packet of the first granularity is delay information of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the delay information of each data packet of the first granularity is delay information of all data packets of the first granularity that are received by the protocol layer.

In a possible implementation, when the first timer for the data packet of the first granularity is stopped and the first protocol layer no longer maintains duration of the first timer, the delay information of each data packet of the first granularity is duration of all first timers that are still maintained at the protocol layer.

In a possible implementation, when the first timer for the data packet of the first granularity is stopped and the first protocol layer maintains duration of the first timer, the delay information of each data packet of the first granularity is duration of first timers for all data packets of the first granularity that are received by the protocol layer.

Delay information of at least one data packet of the first granularity: This may be understood as cache duration or maintenance duration of one data packet of the first granularity at the protocol layer, or cache duration or maintenance duration of a plurality of data packets of the first granularity at the protocol layer, or cache duration or maintenance duration of all data packets of the first granularity at the protocol layer.

In a possible implementation, when transmission of the at least one data packet of the first granularity is completed or segmented transmission of the data packet is completed, the delay information of at least one data packet of the first granularity is delay information of at least one of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the delay information of at least one data packet of the first granularity is delay information of at least one data packet of the first granularity that is received by the protocol layer.

In a possible implementation, when the first timer for the data packet of the first granularity is stopped and the first protocol layer no longer maintains duration of the first timer, the delay information of at least one data packet of the first granularity is duration of at least one first timer that is still maintained at the protocol layer.

In a possible implementation, when the first timer for the data packet of the first granularity is stopped and the first protocol layer maintains duration of the first timer, the delay information of at least one data packet of the first granularity is duration of a first timer for at least one data packet of the first granularity that is received by the protocol layer.

Delay information of an earliest-arriving data packet of the first granularity: This is cache duration or maintenance duration, at the first protocol layer, of a data packet of the first granularity that is earliest received by the protocol layer, or may be understood as duration in which the data packet that is earliest received by the first protocol layer has been cached at the protocol layer during calculation of the first delay information. The earliest-arriving data packet of the first granularity may be understood as a data packet at the first protocol layer that has not been transmitted and that arrives at the first protocol layer at the earliest time.

In a possible implementation, when transmission of the data packet of the first granularity is completed or segmented transmission of the data packet is completed, the delay information of the earliest-arriving data packet of the first granularity is delay information of an earliest-arriving data packet at the first protocol layer among all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the delay information of the earliest-arriving data packet of the first granularity is delay information of a data packet that arrives at the first protocol layer earliest among all data packets of the first granularity that are received by the protocol layer.

In a possible implementation, when the first timer for the data packet of the first granularity is stopped and the first protocol layer no longer maintains duration of the first timer, the delay information of the earliest-arriving data packet of the first granularity is duration of a first timer corresponding to an earliest-arriving data packet among all data packets that are still maintained at the protocol layer.

In a possible implementation, when the first timer for the data packet of the first granularity is stopped and the first protocol layer maintains duration of the first timer, the delay information of the earliest-arriving data packet of the first granularity is duration of a first timer for an earliest-arriving data packet among all data packets of the first granularity that are received by the protocol layer.

Delay information of a start data packet of the first granularity: This is cache duration or maintenance duration of the start data packet (start PDU) of the first granularity at the protocol layer, or may be understood as duration in which an earliest-generated data packet of the first granularity has been cached at the protocol layer during calculation of the first delay information. In an implementation, the start data packet may be understood as an earliest-generated data packet. To be specific, before the start data packet is generated, no other data packet of the first granularity is generated.

Delay information of an end data packet (end PDU) of the first granularity: This is cache duration or maintenance duration of the end data packet of the first granularity at the protocol layer, or may be understood as duration in which the end data packet of the first granularity has been cached at the protocol layer during calculation of the first delay information. The end data packet may be understood as a last-generated data packet. To be specific, after the data packet is generated, no other data packet of the first granularity is generated.

A maximum value of delay information of data packets of the first granularity: This is a maximum value of cache duration or maintenance duration of the data packet of the first granularity at the protocol layer, or may be understood as delay information of a data packet of the first granularity that has longest cache time at the protocol layer.

In a possible implementation, when transmission of the data packet of the first granularity is completed or segmented transmission of the data packet is completed, the maximum value of the delay information of the data packets of the first granularity is a maximum value of delay information of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the maximum value of the delay information of the data packets of the first granularity is a maximum value of delay information of all data packets of the first granularity that are received by the protocol layer.

In a possible implementation, when the first timer for the data packet of the first granularity is stopped and the first protocol layer no longer maintains duration of the first timer, the maximum value of the delay information of the data packets of the first granularity is a maximum value of duration of all first timers that are still maintained at the protocol layer.

In a possible implementation, when the first timer for the data packet of the first granularity is stopped and the first protocol layer maintains duration of the first timer, the maximum value of the delay information of the data packets of the first granularity is a maximum value of duration of first timers for all data packets of the first granularity that are received by the protocol layer.

Delay information of any data packet of the first granularity: This is cache duration or maintenance duration of any data packet of the first granularity at the protocol layer, or may be understood as cache time of any data packet of the first granularity at the protocol layer.

In a possible implementation, when transmission of the data packet of the first granularity is completed or segmented transmission of the data packet is completed, the delay information of any data packet of the first granularity is delay information of any one of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the delay information of any data packet of the first granularity is delay information of any data packet of the first granularity that is received by the protocol layer.

In a possible implementation, when the first timer for the data packet of the first granularity is stopped and the first protocol layer no longer maintains duration of the first timer, the delay information of any data packet of the first granularity is duration of any first timer that is still maintained at the protocol layer.

In a possible implementation, when the first timer for the data packet of the first granularity is stopped and the first protocol layer maintains duration of the first timer, the delay information of any data packet of the first granularity is duration of a first timer for any data packet of the first granularity that is received by the protocol layer.

An average value of delay information of data packets of the first granularity: This is an average value of cache duration or maintenance duration of all data packets of the first granularity at the protocol layer, or may be understood as average cache time of all data packets of the first granularity at the protocol layer.

In a possible implementation, when transmission of the data packet of the first granularity is completed or segmented transmission of the data packet is completed, the average value of the delay information of the data packets of the first granularity is an average value of delay information of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the average value of the delay information of the data packets of the first granularity is an average value of delay information of data packets of the first granularity that are received by the protocol layer.

In a possible implementation, when the first timer for the data packet of the first granularity is stopped and the first protocol layer no longer maintains duration of the first timer, the average value of the delay information of the data packets of the first granularity is an average value of duration of first timers that are still maintained at the protocol layer.

In a possible implementation, when the first timer for the data packet of the first granularity is stopped and the first protocol layer maintains duration of the first timer, the average value of the delay information of the data packets of the first granularity is an average value of duration of first timers for data packets of the first granularity that are received by the protocol layer.

FIG. 1A is used as an example. The PDCP layer starts and maintains the first timer T1, the first timer T2, and the first timer T3 at the current protocol layer. The PDCP layer may obtain delay information D1 of the SDU1 based on the first timer T1, obtain delay information D2 of the SDU2 based on the first timer T2, and obtain delay information D3 of the SDU3 based on the first timer T3. The PDCP layer may determine the first parameter based on the delay information D1, D2, and D3 of the data packets of the first granularity.

In a possible implementation, the first parameter may be delay information of each data packet of the first granularity, namely, D1, D2, and D3.

In a possible implementation, when transmission of the SDU1 of the first granularity is completed or segmented transmission of the SDU1 is completed and transmission or segmented transmission of the SDU2 and the SDU3 has not been completed, the delay information of each data packet of the first granularity is delay information of all data packets of the first granularity that are received by the protocol layer and whose transmission has not been completed or whose segmented transmission has not been completed. To be specific, the first parameter may be the delay information D2 of the SDU2 and the delay information D3 of the SDU3.

In a possible implementation, when transmission of the SDU1 of the first granularity is completed or segmented transmission of the SDU1 is completed but the first protocol layer still caches the SDU1, and transmission or segmented transmission of the SDU2 and the SDU3 has not been completed, the delay information of each data packet of the first granularity is delay information of all data packets of the first granularity that are received by the protocol layer. To be specific, the first parameter may be the delay information D1 of the SDU1, the delay information D2 of the SDU2, and the delay information D3 of the SDU3.

In a possible implementation, when the first timer T1 for the SDU1 of the first granularity is stopped and the first protocol layer no longer maintains duration of the first timer T1, the delay information of each data packet of the first granularity is duration of all of the first timer T2 and the first timer T3 that are still maintained at the protocol layer. To be specific, the first parameter is duration of the first timer T2 and duration of the first timer T3.

In a possible implementation, when the first timer T1 for the SDU1 of the first granularity is stopped and the first protocol layer maintains duration of the first timer T1, the delay information of each data packet of the first granularity is duration of first timers for all data packets of the first granularity that are received by the protocol layer. To be specific, the first parameter is the duration of the first timer T1, duration of the first timer T2, and duration of the first timer T3.

The first parameter may alternatively be delay information of an earliest-arriving data packet of the first granularity. For example, if the earliest-arriving data packet of the first granularity is the SDU1, the first parameter is D1.

In a possible implementation, time at which the SDU1 arrives at the first protocol layer is earlier than that of the SDU2, and the time at which the SDU2 arrives at the first protocol layer is earlier than that of the SDU3. When transmission of the SDU1 of the first granularity is completed or segmented transmission of the data packet is completed, the delay information of the earliest-arriving data packet of the first granularity is delay information of an earliest-arriving data packet among all data packets of the first granularity that are received by the first protocol layer and whose transmission has not been completed or whose segmented transmission has not been completed. To be specific, the first parameter is the delay information of the SDU2.

In a possible implementation, time at which the SDU1 arrives at the first protocol layer is earlier than that of the SDU2, and the time at which the SDU2 arrives at the first protocol layer is earlier than that of the SDU3. When transmission of the data packet of the first granularity is completed or segmented transmission of the data packet is completed but the first protocol layer still caches the data packet SDU1, the delay information of the earliest-arriving data packet of the first granularity is delay information of a data packet that arrives at the first protocol layer earliest among all data packets of the first granularity that are received by the protocol layer. To be specific, the first parameter is the delay information of the SDU1.

The first parameter may alternatively be a maximum value of delay information of data packets of the first granularity. For example, if the delay information D1 > D2 > D3, the first parameter is D1.

The first parameter may alternatively be delay information of any data packet of the first granularity. To be specific, any piece of delay information, for example, D2, is determined from the delay information D1, D2, and D3. The first parameter may alternatively be an average value of delay information of data packets of the first granularity, to be specific, an average value of the delay information D1, D2, and D3: (D1 + D2 + D3)/3.

When the SDU1 is a start data packet of the first granularity, the first parameter may alternatively be the delay information of the SDU1. When the SDU3 is an end data packet of the first granularity, the first parameter may alternatively be the delay information of the SDU3.

In a possible implementation, if the delay information D1 > D2 > D3, when transmission of the SDU1 of the first granularity is completed or segmented transmission of the data packet is completed, the maximum value of the delay information of the data packets of the first granularity is a maximum value of delay information of all data packets of the first granularity that are received by the protocol layer and whose transmission has not been completed or whose segmented transmission has not been completed. To be specific, the first parameter may be a maximum value of the delay information of the SDU2 and the delay information of the SDU3, that is, D2.

In a possible implementation, if the delay information D1 > D2 > D3, when transmission of the SDU1 of the first granularity is completed or segmented transmission of the data packet is completed but the first protocol layer still caches the data packet, the maximum value of the delay information of the data packets of the first granularity is a maximum value of delay information of all data packets of the first granularity that are received by the protocol layer. To be specific, the first parameter may be a maximum value of the delay information of the SDU1, the delay information of the SDU2, and the delay information of the SDU3, that is, D1.

In a possible implementation, when transmission of the SDU1 of the first granularity is completed or segmented transmission of the data packet is completed, the delay information of any data packet of the first granularity is delay information of any one of all data packets of the first granularity that are received by the protocol layer and whose transmission has not been completed or whose segmented transmission has not been completed. To be specific, the first parameter may be delay information of either of the SDU2 and the SDU3, for example, D2.

In a possible implementation, when transmission of the SDU1 of the first granularity is completed or segmented transmission of the data packet is completed but the first protocol layer still caches the data packet, the delay information of any data packet of the first granularity is delay information of any data packet of the first granularity that is received by the protocol layer. To be specific, the first parameter may be delay information of any one of the SDU1, the SDU2, and the SDU3, for example, D3.

In a possible implementation, when the first timer T1 for the SDU1 of the first granularity is stopped and the first protocol layer no longer maintains duration of the first timer T1, the delay information of any data packet of the first granularity is duration of any first timer that is still maintained at the protocol layer. To be specific, the first parameter may be duration of either of the first timer T2 and the first timer T3, for example, duration of the first timer T2.

In a possible implementation, when the first timer T1 for the SDU1 of the first granularity is stopped and the first protocol layer maintains duration of the first timer, the delay information of any data packet of the first granularity is duration of a first timer for any data packet of the first granularity that is received by the protocol layer. To be specific, the first parameter may be duration of any one of the first timer T1, the first timer T2, and the first timer T3, for example, duration of the first timer T3.

S1012: Determine the first delay information of the first granularity based on the first parameter and the first threshold.

Specifically, the first protocol layer has obtained the first parameter through the foregoing steps. The first protocol layer may determine the first delay information of the first granularity based on the first parameter and the first threshold. The first threshold is used for calculating the first delay information. The first threshold may also be understood as a threshold configured for the first granularity. The first threshold may be obtained by a transmit end through a higher layer or an application layer, or may be received by a transmit end and sent by a receive end, or may be configured by a core network through network attached storage NAS signaling. It should be noted that the transmit end may be described as user equipment, and the receive end may be described as a network device.

A specific calculation method for determining the first delay information of the first granularity based on the first parameter and the first threshold may be as follows:

First delay information = min(First threshold - Delay information of each data packet of the first granularity): To be specific, the delay information of each data packet of the first granularity at the first protocol layer is subtracted from the first threshold to obtain a difference between the first threshold and the delay information of each data packet of the first granularity, and a minimum value of the one or more differences is the first delay information. The first delay information may also be understood as a minimum value obtained by subtracting the first parameter from the first threshold.

First delay information = Average value of (First threshold - Delay information of each data packet of the first granularity): To be specific, the delay information of each data packet of the first granularity at the first protocol layer is subtracted from the first threshold to obtain a difference between the first threshold and the delay information of each data packet of the first granularity, and an average value of the one or more differences is the first delay information. That is, the first delay information is an average value obtained by subtracting the first parameter from the first threshold.

First delay information = Any value of (First threshold - Delay information of each data packet of the first granularity): To be specific, the delay information of each data packet of the first granularity at the first protocol layer is subtracted from the first threshold to obtain a difference between the first threshold and the delay information of each data packet of the first granularity, and any one of the one or more differences is the first delay information. That is, the first delay information is any value obtained by subtracting the first parameter from the first threshold.

First delay information = Maximum value or minimum value of (First threshold - Delay information of each data packet of the first granularity): To be specific, the delay information of each data packet of the first granularity at the first protocol layer is subtracted from the first threshold to obtain a difference between the first threshold and the delay information of each data packet of the first granularity, and a maximum value or a minimum value of the one or more differences is the first delay information. That is, the first delay information is a maximum value or a minimum value obtained by subtracting the first parameter from the first threshold.

First delay information = First threshold - Delay information of an earliest-arriving data packet of the first granularity: To be specific, the delay information of the earliest-arriving data packet of the first granularity at the first protocol layer is subtracted from the first threshold to obtain a difference between the first threshold and the delay information of the earliest-arriving data packet of the first granularity, and the difference is the first delay information. The first delay information may also be understood as the first threshold minus the first parameter.

First delay information = First threshold - Delay information of a start data packet of the first granularity: To be specific, the delay information of the start data packet of the first granularity is subtracted from the first threshold to obtain a difference between the first threshold and the delay information of the start data packet of the first granularity, and the difference is the first delay information. The first delay information may also be understood as the first threshold minus the first parameter.

First delay information = First threshold - Delay information of an end data packet of the first granularity: To be specific, the delay information of the end data packet of the first granularity is subtracted from the first threshold to obtain a difference between the first threshold and the delay information of the end data packet of the first granularity, and the difference is the first delay information. The first delay information may also be understood as the first threshold minus the first parameter.

First delay information = First threshold - Maximum value of delay information of data packets of the first granularity: To be specific, the maximum value of the delay information of the data packets of the first granularity at the first protocol layer is subtracted from the first threshold to obtain a difference between the first threshold and the maximum value of the delay information of the data packets of the first granularity, and the difference is the first delay information. The first delay information may also be understood as the first threshold minus the first parameter.

First delay information = First threshold - Delay information of any data packet of the first granularity: To be specific, the delay information of any data packet of the first granularity at the first protocol layer is subtracted from the first threshold to obtain a difference between the first threshold and the delay information of any data packet of the first granularity, and the difference is the first delay information. The first delay information may also be understood as the first threshold minus the first parameter.

First delay information = First threshold - Average value of delay information of data packets of the first granularity: To be specific, the average value of the delay information of the data packets of the first granularity at the first protocol layer is subtracted from the first threshold to obtain a difference between the first threshold and the average value of the delay information of the data packets of the first granularity, and the difference is the first delay information. The first delay information may also be understood as the first threshold minus the first parameter.

FIG. 1A is used as an example. The PDCP layer may determine the first delay information of the first granularity based on the first parameter and the first threshold. If the first parameter is delay information of each data packet of the first granularity, namely, D1, D2, and D3, the first delay information is min(first threshold - D1, first threshold - D2, first threshold - D3).

In a possible implementation, if the first parameter is delay information D1 of an earliest-arriving data packet SDU1 of the first granularity, the first delay information is the first threshold - D1. If the first parameter is a maximum value D1 of delay information of data packets of the first granularity, the first delay information is the first threshold - D1.

In a possible implementation, if the first parameter is delay information D2 of any data packet of the first granularity, the first delay information is the first threshold - D2.

In a possible implementation, if the first parameter is an average value (D1 + D2 + D3)/3 of delay information of data packets of the first granularity, the first delay information is the first threshold - (D1 + D2 + D3)/3.

In a possible implementation, if the first parameter is the delay information D2 of the SDU2 and the delay information D3 of the SDU3, the first delay information is min(first threshold - D2, first threshold - D3).

In a possible implementation, if the first parameter is delay information of an earliest-arriving data packet SDU2, the first delay information is the first threshold - D2.

In a possible implementation, if the first parameter is delay information D1 of a start data packet SDU1 of the first granularity, the first delay information is the first threshold - D1.

In a possible implementation, if the first parameter is delay information D3 of a start data packet SDU3 of the first granularity, the first delay information is the first threshold - D3.

In a possible implementation, if the first parameter is a maximum value of the delay information of the SDU2 and the delay information of the SDU3, that is, D2, the first delay information is the first threshold - D2.

In a possible implementation, if the first parameter is delay information of either of the SDU2 and the SDU3, for example, D2, the first delay information is the first threshold - D2.

In a possible implementation, if the first parameter is delay information of any one of the SDU1, the SDU2, and the SDU3, for example, D3, the first delay information is the first threshold - D3.

In a possible implementation, if the first parameter is duration of the first timer T2 and duration of the first timer T3, the first delay information is min(first threshold - duration of T2, first threshold - duration of T3).

In a possible implementation, if the first parameter is duration of the first timer T1, duration of the first timer T2, and duration of the first timer T3, the first delay information is min(first threshold - duration of T1, first threshold - duration of T2, first threshold - duration of T3).

In a possible implementation, if the first parameter is duration of either of the first timer T2 and the first timer T3, for example, duration of the first timer T2, the first delay information is the first threshold - duration of T2.

In a possible implementation, if the first parameter is duration of any one of the first timer T1, the first timer T2, and the first timer T3, for example, duration of the first timer T3, the first delay information is the first threshold - duration of T3.

After the first delay information is obtained based on the method, the first delay information may be transmitted to a lower layer. To be specific, the first delay information is transmitted to a protocol layer lower than the first protocol layer. After obtaining the first delay information, the lower layer may obtain first indication information based on the first delay information, and report the first delay information by sending the first indication information to the receive end. A specific implementation is described in subsequent embodiments and is not described herein.

S1011b: Determine the second parameter based on the obtained delay information of the data packet of the first granularity, and determine the first delay information based on the second parameter.

Specifically, for descriptions of obtaining, by the first protocol layer, the delay information of the data packet of the first granularity, refer to the foregoing descriptions. Details are not described herein again. The second parameter may be at least one of the following: average remaining delay information of the first granularity, minimum remaining delay information of the first granularity, or any remaining delay information of the first granularity. The average remaining delay information of the first granularity may be understood as an average value of remaining delay information of data packets of the first granularity at the first protocol layer. The minimum remaining delay information of the first granularity may be understood as a minimum value of remaining delay information of data packets of the first granularity at the first protocol layer. The any remaining delay information of the first granularity may be understood as remaining delay information of any data packet of the first granularity at the first protocol layer. After the second parameter is obtained, the first delay information is determined based on the second parameter, in other words, the second parameter is determined as the first delay information. This may also be understood as that a value of the second parameter is the same as a value of the first delay information.

In a possible implementation, after the first protocol layer obtains the first delay information and transmits the first delay information to a third protocol layer, the third protocol layer may determine whether a first uplink resource used for reporting the first indication information is obtained. The first indication information is used for indicating a value or a value range of second delay information. The second delay information is determined based on the first delay information, or is determined based on the first delay information and a waiting delay of the first uplink resource. The first indication information is reported when it is determined that the first uplink resource is obtained. For a specific implementation, refer to subsequent descriptions of an embodiment of a delay information sending method. Details are not described herein.

(B) Obtain delay information of a data packet based on one or more timers corresponding to the data packet.

S201: Obtain first delay information of a first granularity.

Specifically, a first protocol layer or a second protocol layer may determine the first delay information of the first granularity based on delay information of a data packet of the first granularity. For the delay information of the data packet, refer to the foregoing descriptions. Details are not described herein again.

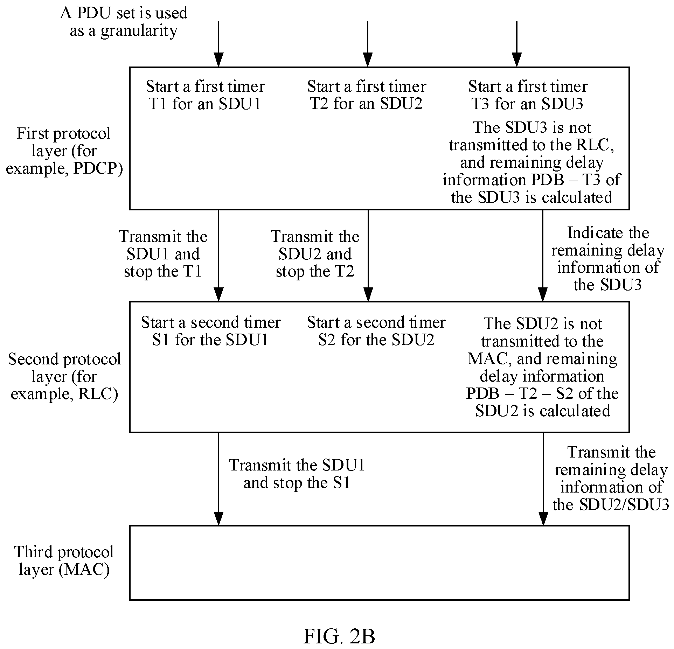

In some embodiments, as shown in FIG. 2A, with reference to a diagram of a protocol layer structure shown in FIG. 2B, a specific process of the method may include: An implementation of this step may be as follows: The first protocol layer first obtains a data packet of the first granularity, and starts a first timer corresponding to the data packet. Then the second protocol layer obtains a data packet sent by the first protocol layer, and the second protocol layer starts a second timer for the data packet. The second protocol layer may obtain delay information of the data packet based on duration information of the timer corresponding to the data packet. Then the second protocol layer determines the first delay information of the first granularity based on the delay information of the data packet of the first granularity. A specific implementation process may be as follows:
S2010: Obtain a data packet of the first granularity, and start a first timer corresponding to the data packet.

Specifically, the first protocol layer may obtain the data packet of the first granularity. To be specific, the first protocol layer receives the data packet, and the data packet belongs to the first granularity. It should be noted that the first granularity may include at least one data packet. Therefore, the data packet of the first granularity may be one data packet of the first granularity, a plurality of data packets of the first granularity, or all data packets of the first granularity. The first protocol layer may be an SDAP layer, a PDCP layer, an RLC layer, or another protocol layer. This is not limited in this application. The first granularity may be an RLC entity, an RLC entity group including a plurality of RLC entities, a logical channel LCH, an LCH group including a plurality of LCHs, a PDU set, and a data burst data burst. Alternatively, the first granularity may be another entity, set, or the like that includes one or more data packets.

After obtaining the data packet of the first granularity, the first protocol layer starts the first timer corresponding to the data packet. In the method, the first timer may be configured to obtain cache duration or maintenance duration of the data packet at the first protocol layer. The cache duration or maintenance duration at the first protocol layer may be understood as a difference between time at which the data packet arrives at the first protocol layer and time at which the data packet is transmitted to a next protocol layer, or may be understood as a difference between time at which the first protocol layer receives the data packet and time at which the data packet is transmitted to a next protocol layer, or may be understood as cache duration of the data packet at the first protocol layer within a period from time at which the first protocol layer obtains the data packet to time at which the data packet is transmitted to a next protocol layer.

FIG. 2B is used as an example. The first protocol layer may be a PDCP layer, and the first granularity may be a PDU set. The PDCP layer may obtain data packets SDU1, SDU2, and SDU3 in the PDU set. The PDCP layer may start and maintain a corresponding first timer T1 for the SDU1, start and maintain a corresponding first timer T2 for the SDU2, and start and maintain a corresponding first timer T3 for the SDU3. The first timer T1 is configured to record cache duration or maintenance duration of the SDU1 at the PDCP layer. The first timer T2 is configured to record cache duration or maintenance duration of the SDU2 at the PDCP layer. The first timer T3 is configured to record cache duration or maintenance duration of the SDU3 at the PDCP layer.

S2011: Receive the data packet of the first granularity, and start a second timer corresponding to the data packet.

Specifically, the second protocol layer may receive the data packet of the first granularity that is sent by the first protocol layer. After receiving the data packet of the first granularity, the second protocol layer may start the corresponding second timer for the data packet. The second timer is configured to record cache duration of the corresponding data packet at the second protocol layer. For a definition of the cache duration, refer to the foregoing descriptions of the delay information of the data packet. The second protocol layer is lower than the first protocol layer. In addition, the cache duration at the second protocol layer may be understood as a difference between time at which the data packet arrives at the second protocol layer and time at which the second protocol layer transmits the data packet to a next protocol layer, or may be understood as a difference between time at which the second protocol layer receives the data packet and time at which a next protocol layer receives the data packet, or may be understood as duration in which the data packet has been cached at the second protocol layer within a period from time at which the second protocol layer obtains the data packet to time at which the data packet is transmitted to a next protocol layer.

FIG. 2B is used as an example. The first protocol layer may be a PDCP layer, and the second protocol layer may be an RLC layer. The RLC layer is lower than the PDCP layer. The RLC layer may receive the data packets SDU1 and SDU2 that are sent by the PDCP layer. After receiving the SDU1 and the SDU2, the second protocol layer may start and maintain a second timer S1 for the SDU1, and start and maintain a second timer S2 for the SDU2. The second timer S1 is configured to record cache duration of the SDU1 at the RLC layer. The second timer S2 is configured to record cache duration of the SDU2 at the RLC layer.

S2012: Obtain delay information of the data packet based on duration information of a timer corresponding to the data packet.

Specifically, obtaining, by the first protocol layer and/or the second protocol layer, duration information of a timer corresponding to a data packet (for example, a first data packet) (which may also be referred to as duration of a timer for short, for example, duration of a first timer corresponding to the first data packet and/or duration of a second timer corresponding to the first data packet) may be understood as reading duration information recorded by the timer corresponding to the data packet for the data packet. In an implementation, the duration of the timer for the data packet is obtained, and the duration of the timer for the data packet is transmitted. For example, the duration of the first timer corresponding to the first data packet and/or the duration of the second timer corresponding to the first data packet are/is obtained. Then the duration of the first timer for the first data packet is transmitted, or the duration of the first timer for the first data packet and the duration of the second timer for the first data packet are transmitted.

In a possible implementation, when a first condition is met, each protocol layer obtains duration of a timer for a data packet (for example, the first data packet) (for example, the duration of the first timer corresponding to the first data packet and/or the duration of the second timer corresponding to the first data packet), and transmits the duration of the timer for the data packet to a protocol layer corresponding to the data packet (for example, when or after the first protocol layer transmits the first data packet to the second protocol layer, the first protocol layer transmits the duration of the first timer for the first data packet to the second protocol layer), or transmits the duration of the timer for the data packet to the second protocol layer. The transmitting the duration of the timer for the data packet may be transmitting the duration of the first timer for the data packet and the duration of the second timer for the data packet, or may be transmitting only the duration of the first timer for the first data packet. It can be understood that the duration of the timer for the data packet is used for indicating cache duration of the data packet at each protocol layer. The first condition may include at least one of the following: a. The data packet has been transmitted to a protocol layer lower than the first protocol layer. b. Each protocol layer obtains second indication information, where the second indication information is used for indicating transmission of timer duration of the data packet, or indicating triggering of reporting of delay information. c. Reporting of delay information is triggered.

FIG. 2B is used as an example. The SDU1 is used for description herein. In this case, the RLC layer receives the SDU1. When the first condition is met, for example, when the first data packet has been transmitted to the RLC layer, or when the PDCP layer and the RLC layer obtain the second indication information, where the second indication information is used for indicating transmission of timer duration of the SDU1, or when reporting of delay information is triggered, the PDCP layer obtains duration D1 of a first timer for the SDU1, and the RLC layer obtains duration M1 of a second timer for the SDU1. The PDCP layer transmits the duration D1 to the RLC layer.

In the foregoing steps, a protocol layer at which a data packet (for example, the foregoing specified data packet) is located has obtained duration information of a timer corresponding to the data (which may also be referred to as duration of a timer for short), and then the protocol layer at which the data packet is located may obtain delay information of the data packet based on the duration information of the timer corresponding to the data packet. In a possible implementation, the protocol layer at which the data packet is located may add up duration recorded by all timers corresponding to the data packet, to obtain the delay information of the data packet. For example, obtaining delay information of the first data packet is determining duration of the first timer for the first data packet and duration of the second timer for the first data packet, to be specific, adding up the duration of the first timer for the first data packet and the duration of the second timer for the first data packet.

FIG. 2B is used as an example. The SDU1 is used for description herein. The RLC layer receives the duration D1 recorded by the first timer T1 for the SDU1, and obtains the duration M1 recorded by the second timer S1 for the SDU1. The RLC layer may add up M1 and D1 to obtain delay information of the SDU1, that is, D1 + M1. It can be understood that, when a data packet corresponds only to one timer, duration information of the timer is delay information of the data packet. For example, the SDU3 has only one timer: the first timer T3. Duration D3 recorded by the first timer T3 is delay information of the SDU3.

S2013: Determine the first delay information of the first granularity based on the delay information of the data packet of the first granularity.

Specifically, the method may include the following two implementations:
(a) Determine a first parameter based on the delay information of the data packet of the first granularity, and determine the first delay information of the first granularity based on the first parameter and a first threshold.

The delay information of the data packet of the first granularity may be delay information of one data packet of the first granularity, or may include delay information of each of a plurality of data packets of the first granularity, or may include delay information of each of all data packets of the first granularity. The first parameter is related to the delay information of the data packet of the first granularity. To be specific, before the first parameter is determined, the delay information of the data packet of the first granularity is obtained, and then the first parameter is obtained based on the delay information of the data packet of the first granularity.

Specifically, the first parameter may be determined based on the delay information of the data packet of the first granularity in the following several implementations, which are described below:
(1) Each protocol layer obtains delay information of an earliest-arriving data packet of the first granularity that is currently maintained at the protocol layer, and transmits the delay information to the second protocol layer. The second protocol layer determines, as the first parameter, a maximum value of delay information of a plurality of earliest-arriving data packets of the first granularity that are determined at all the foregoing protocol layers. To be specific, a maximum value of delay information of earliest-arriving data packets of the first granularity is the first parameter. For calculation and descriptions of the delay information of the earliest-arriving data packet of the first granularity, refer to the descriptions in the embodiments shown in FIG. 1A to FIG. 1C. Details are not described herein again. The second protocol layer may be understood as a protocol layer for calculating the first delay information.
(2) Each protocol layer obtains maximum delay information of data packets of the first granularity that are currently maintained at the protocol layer, and transmits the delay information to the second protocol layer. The second protocol layer determines, as the first parameter, a maximum value of a plurality of pieces of maximum delay information of the first granularity that are determined at all the foregoing protocol layers. To be specific, the maximum value of the plurality of pieces of maximum delay information of the first granularity is the first parameter. For calculation and descriptions of the maximum delay information of the data packets of the first granularity, refer to the descriptions in the embodiments shown in FIG. 1A and FIG. 1B. Details are not described herein again.
(3) Each protocol layer obtains delay information of any data packet of the first granularity that is currently maintained at the protocol layer, and transmits the delay information to the second protocol layer. The second protocol layer determines, as the first parameter, a maximum value of a plurality of pieces of any delay information of the first granularity that are determined at the foregoing protocol layers. To be specific, the maximum value of the plurality of pieces of any delay information of the first granularity is the first parameter. For calculation and descriptions of the delay information of any data packet of the first granularity, refer to the descriptions in the embodiments shown in FIG. 1A and FIG. 1B. Details are not described herein again.
(4) Each protocol layer obtains average delay information of data packets of the first granularity that are currently maintained at the protocol layer, and transmits the delay information to the second protocol layer. The second protocol layer determines, as the first parameter, a maximum value of a plurality of pieces of average delay information of the first granularity that are determined at the foregoing protocol layers. To be specific, the maximum value of the plurality of pieces of average delay information of the first granularity is the first parameter. For calculation and descriptions of the average delay information of the data packets of the first granularity, refer to the descriptions in the embodiments shown in FIG. 1A and FIG. 1B. Details are not described herein again.
(5) Each protocol layer obtains delay information of data packets of the first granularity that are currently maintained at the protocol layer, and transmits the delay information to the second protocol layer. The second protocol layer determines a median of a plurality of pieces of delay information of the first granularity as the first parameter. For calculation and descriptions of the delay information of the data packets of the first granularity, refer to the descriptions in the embodiments shown in FIG. 1A and FIG. 1B. Details are not described herein again.

The second protocol layer determines the first delay information of the first granularity based on the first parameter and the first threshold. For example, a calculation method may be: First delay information = First threshold - First parameter. Details are as follows:
First delay information = First threshold - max(Delay information of a plurality of earliest-arriving data packets of the first granularity). To be specific, a maximum value of the delay information of the plurality of earliest-arriving data packets of the first granularity is subtracted from the first threshold to obtain a difference between the first threshold and the maximum value of the delay information of the plurality of earliest-arriving data packets of the first granularity, and the difference is the first delay information.

First delay information = First threshold - max(A plurality of pieces of maximum delay information of the first granularity). To be specific, a maximum value of the plurality of pieces of maximum delay information of the first granularity is subtracted from the first threshold to obtain a difference between the first threshold and the maximum value of the plurality of pieces of maximum delay information of the first granularity, and the difference is the first delay information.

First delay information = First threshold - max(A plurality of pieces of any delay information of the first granularity). To be specific, a maximum value of the plurality of pieces of any delay information of the first granularity is subtracted from the first threshold to obtain a difference between the first threshold and the maximum value of the plurality of pieces of any delay information of the first granularity, and the difference is the first delay information.

First delay information = First threshold - max(A plurality of pieces of average delay information of the first granularity). To be specific, a maximum value of the plurality of pieces of average delay information of the first granularity is subtracted from the first threshold to obtain a difference between the first threshold and the maximum value of the plurality of pieces of average delay information of the first granularity, and the difference is the first delay information.

First delay information = First threshold - Median of a plurality of pieces of remaining delay information of the first granularity. To be specific, the median of the plurality of pieces of remaining delay information of the first granularity is subtracted from the first threshold to obtain a difference between the first threshold and the median of the plurality of pieces of remaining delay information of the first granularity, and the difference is the first delay information.

FIG. 2B is used as an example. The RLC layer maintains the SDU1 and the SDU2, and the PDCP layer maintains the SDU3. The SDU1, the SDU2, and the SDU3 belong to a same PDU set (the first granularity). A MAC layer may be configured to calculate the first delay information. Therefore, for example, the first delay information may be obtained in the following four manners:
(1) The PDCP layer learns that an earliest-arriving data packet of the first granularity that is currently maintained at the protocol layer is the SDU3, and the delay information of the SDU3 is D3. The RLC layer learns that an earliest-arriving data packet of the first granularity that is currently maintained at the protocol layer is the SDU1, and the delay information of the SDU1 is D1 + M1. The PDCP layer transmits the delay information D3 to the MAC layer, and the RLC layer transmits the delay information D1 + M1 to the MAC layer. When the MAC layer determines that the delay information D1 + M1 in the foregoing two pieces of delay information is a maximum value, the MAC layer determines that the delay information D1 + M1 is the first parameter. The first delay information obtained by the MAC layer is as follows: First delay information = First threshold - (D1 + M1).
(2) The PDCP layer learns that maximum delay information of data packets of the first granularity that are currently maintained at the protocol layer is the delay information D3 of the SDU3. The RLC layer learns that maximum delay information of data packets of the first granularity that are currently maintained at the protocol layer is the delay information D1 + M1 of the SDU1. The PDCP layer transmits the delay information D3 to the MAC layer, and the RLC layer transmits the delay information D1 + M1 to the MAC layer. When the MAC layer determines that the delay information D1 + M1 in the foregoing two pieces of delay information is a maximum value, the MAC layer determines that the delay information D1 + M1 is the first parameter. The first delay information obtained by the MAC layer is as follows: First delay information = First threshold - (D1 + M1).
(3) The PDCP layer learns that delay information of any data packet of the first granularity that is currently maintained at the protocol layer is the delay information D3 of the SDU3. The RLC layer learns that delay information of any data packet of the first granularity that is currently maintained at the protocol layer is the delay information D2 + M2 of the SDU2 (for obtaining of the delay information of the SDU2, refer to the foregoing SDU1). The PDCP layer transmits the delay information D3 to the MAC layer, and the RLC layer transmits the delay information D2 + M2 to the MAC layer. When the MAC layer determines that the delay information D2 + M2 in the foregoing two pieces of delay information is a maximum value, the MAC layer determines that the delay information D2 + M2 is the first parameter. The first delay information obtained by the MAC layer is as follows: First delay information = First threshold - (D2 + M2).
(4) The PDCP layer obtains average delay information D3 of data packets of the first granularity that are currently maintained at the protocol layer. The RLC layer obtains average delay information (D1 + D2 + M1 + M2)/2 of data packets of the first granularity that are currently maintained at the protocol layer. The PDCP layer transmits the average delay information D3 to the MAC layer, and the RLC layer transmits the average delay information (D1 + D2 + M1 + M2)/2 to the MAC layer. When the MAC layer determines that the average delay information D2 + M2 in the foregoing two pieces of average delay information is a maximum value, the MAC layer determines that the average delay information D2 + M2 is the first parameter. The first delay information obtained by the MAC layer is as follows: First delay information = First threshold - (D 1 + D2 + M1 + M2)/2.

**(b)** Determine a second parameter based on the delay information of the data packet of the first granularity and a first threshold. The second parameter is the same as the first delay information.

Specifically, the second parameter may be determined based on the delay information of the data packet of the first granularity and the first threshold in the following several implementations, which are described below:
(1) Each protocol layer determines minimum remaining delay information of the protocol layer based on a data packet of the first granularity that is currently maintained at the protocol layer, and transmits the minimum remaining delay information to the second protocol layer. The second protocol layer determines a minimum value of minimum remaining delay information of the first granularity as the second parameter. The second parameter is the same as the first delay information. To be specific, the first delay information = min(minimum remaining delay information of each protocol layer that is calculated by the protocol layer). The minimum remaining delay information of the protocol layer is a minimum value of remaining delay information of data packets of the first granularity that are currently maintained at the protocol layer. Remaining delay information of a data packet may be understood as remaining duration in which the data packet can be further cached at the protocol layer, where the data packet is discarded when the remaining duration is exceeded; or may be understood as a difference obtained by subtracting delay information of the data packet from the first threshold, and indicates remaining time for which the data packet can be cached in the protocol layer to wait for sending. For understanding of remaining delay information of a data packet in subsequent descriptions, refer to the descriptions herein.
(2) Each protocol layer determines remaining delay information of any data packet (which may also be referred to as any remaining delay information) at the protocol layer based on a data packet of the first granularity that is currently maintained at the protocol layer, and transmits the remaining delay information to the second protocol layer. The second protocol layer determines a minimum value of any remaining delay information of the first granularity as the second parameter. The second parameter is the same as the first delay information. To be specific, the first delay information = min(any remaining delay information of each protocol layer that is calculated by the protocol layer). The remaining delay information of any data packet at the protocol layer may be understood as remaining delay information calculated for any selected data packet at the protocol layer.
(3) Each protocol layer determines average remaining delay information (which may also be referred to as any remaining delay information) at the protocol layer based on a data packet of the first granularity that is currently maintained at the protocol layer, and transmits the average remaining delay information to the second protocol layer. The second protocol layer determines a minimum value of average remaining delay information of the first granularity as the second parameter. The second parameter is the same as the first delay information. To be specific, the first delay information = min(average remaining delay information of each protocol layer that is calculated by the protocol layer). The average remaining delay information of the protocol layer may be understood as an average value of remaining delay information of all data packets currently maintained at the protocol layer. A maintained data packet may be understood as a cached data packet at the protocol layer.
(4) Each protocol layer may obtain remaining delay information of data packets maintained at the protocol layer, and transmit the remaining delay information to the second protocol layer. The second protocol layer may determine, based on the plurality of pieces of remaining delay information, that average remaining delay information is the second parameter, or minimum remaining delay information is the second parameter, or any remaining delay information is the second parameter. The second parameter is the first delay information.

In a possible implementation, when a second condition is met, duration of a timer corresponding to the first data packet of the first granularity is deleted, or a timer corresponding to the first data packet is stopped. The second condition includes one or more of the following: it is learned that the first data packet has been transmitted; it is learned that the first data packet has been sent; it is learned that the first data packet is successfully transmitted; it is learned that at least one piece of segmented data of the first data packet has been transmitted; it is learned that at least one piece of segmented data of the first data packet has been sent; it is learned that at least one piece of segmented data of the first data packet is successfully transmitted; or it is learned that the duration of the timer corresponding to the first data packet has been transmitted.

In a possible implementation, before the first delay information of the first granularity is obtained, whether a first timer and a second timer for the data packet of the first granularity are running is determined. When the first timer and the second timer are running, the delay information of the data packet corresponding to the first timer is obtained. When the first timer and the second timer are stopped, no delay information of the data packet corresponding to the first timer is obtained.

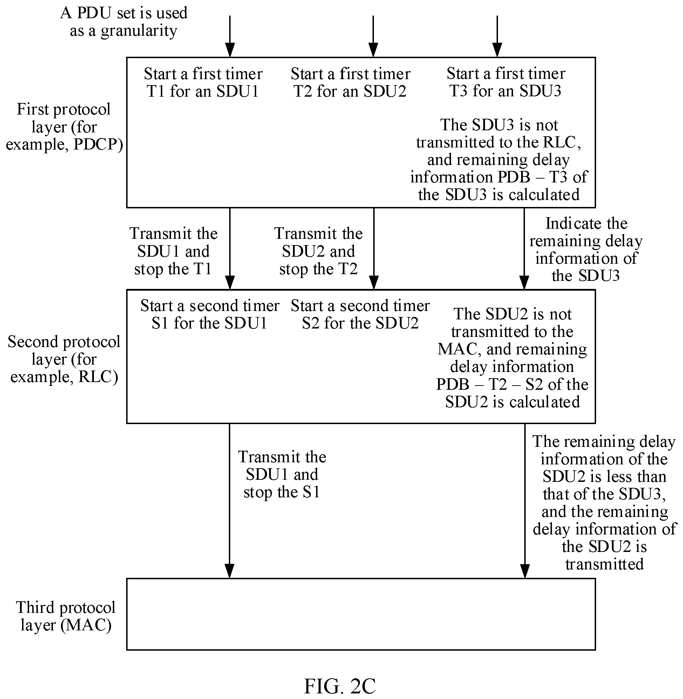

FIG. 2C is used as an example. An RLC layer maintains an SDU1 and an SDU2, and a PDCP layer maintains an SDU3. The SDU1, the SDU2, and the SDU3 belong to a same PDU set (the first granularity). A MAC layer may be configured to calculate the first delay information. If delay information of the SDU1 is greater than that of the SDU2, for example, the first delay information may be obtained in the following three manners:
(1) The PDCP layer determines minimum remaining delay information, that is, the first threshold PDB - D3, of the PDCP based on the data packet SDU3 currently maintained at the protocol layer. The RLC layer determines minimum remaining delay information PDB - D1 - M1 of the RLC layer based on the data packets SDU1 and SDU2 currently maintained at the protocol layer. The PDCP layer transmits the minimum remaining delay information PDB - D3 to the MAC layer, and the RLC layer transmits the minimum remaining delay information PDB - D1 - M1 to the MAC layer. When the MAC layer determines that the minimum remaining delay information PDB - D1 - M1 in the foregoing two pieces of minimum remaining delay information is a minimum value, PDB - D1 - M1 is the second parameter, and the first delay information is PDB - D1 - M1.
(2) The PDCP layer determines any remaining delay information PDB - D3 of the PDCP based on the data packet SDU3 currently maintained at the protocol layer. The RLC layer determines any remaining delay information PDB - D2 - M2 of the RLC layer based on the data packets SDU1 and SDU2 currently maintained at the protocol layer. The PDCP layer transmits the any remaining delay information PDB - D3 to the MAC layer, and the RLC layer transmits the any remaining delay information PDB - D2 - M2 to the MAC layer. When the MAC layer determines that the any remaining delay information PDB - D2 - M2 in the foregoing two pieces of any remaining delay information is a minimum value, PDB - D2 - M2 is the second parameter, and the first delay information is PDB - D2 - M2.
(3) The PDCP layer determines average remaining delay information PDB - D3 of the PDCP based on the data packet SDU3 currently maintained at the protocol layer. The RLC layer determines average remaining delay information [(PDB - D2 - M2) + (PDB - D1 - M1)]/2 of the RLC layer based on the data packets SDU1 and SDU2 currently maintained at the protocol layer. The PDCP layer transmits the average remaining delay information PDB - D3 to the MAC layer, and the RLC layer transmits the average remaining delay information [(PDB - D2 - M2) + (PDB - D1 - M1)]/2 to the MAC layer. When the MAC layer determines that the average remaining delay information [(PDB - D2 - M2) + (PDB - D1 - M1)]/2 in the foregoing two pieces of average remaining delay information is a minimum value, [(PDB - D2 - M2) + (PDB - D1 - M1)]/2 is the second parameter, and the first delay information is [(PDB - D2 - M2) + (PDB - D1 - M1)]/2.

After the first delay information is obtained based on the method, the first delay information may be transmitted to a lower layer. To be specific, the first delay information is transmitted to a protocol layer lower than the second protocol layer. After obtaining the first delay information, the lower layer may obtain first indication information based on the first delay information, and report the first delay information by sending the first indication information to the receive end. A specific implementation is described in subsequent embodiments and is not described herein.

Method 2: Determine first delay information of a first granularity based on a timestamp at which a data packet of the first granularity arrives.

In the method, a first protocol layer and/or a second protocol layer and/or a third protocol layer may obtain a timestamp/timestamps at which one or more data packets of the first granularity arrives/arrive at the first protocol layer. The timestamp of arriving at the first protocol layer may be understood as time information when the data packet arrives at the first protocol layer, or may be understood as time information when the first protocol layer receives the data packet. The first protocol layer, the second protocol layer, or the third protocol layer may determine first time information from the timestamp/timestamps of the one or more data packets. The first delay information is determined based on second time information and the first time information. For descriptions of the first delay information, refer to the foregoing descriptions. The first time information is related to the timestamp at which the data packet of the first granularity arrives. The first time information includes at least one of the following: a system frame number, subframe information, slot information, and symbol information. The second time information is a timestamp at which the first delay information is calculated (which may also be referred to as a current timestamp). It should be noted that the timestamp described in this application is the same as the timestamp information described in this application.

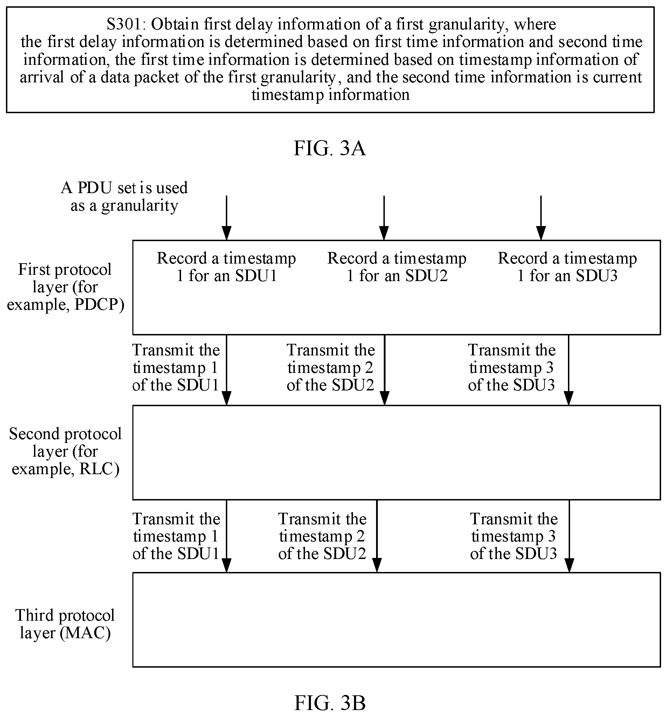

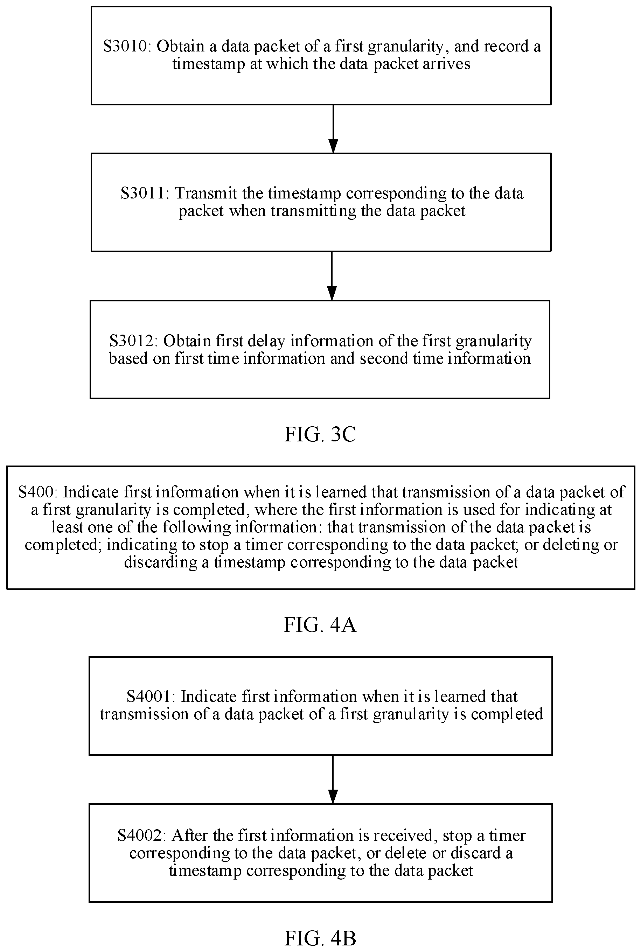

As shown in FIG. 3A and FIG. 3C, with reference to a diagram of a protocol layer structure shown in FIG. 3B, a specific process of the method includes the following steps.

S301: Obtain first delay information of a first granularity. The first delay information is determined based on first time information and second time information. The first time information is determined based on timestamp information of arrival of a data packet of the first granularity. The second time information is current timestamp information.

Specifically, for delay information of a data packet, refer to the foregoing descriptions. Details are not described herein again.

In an implementation, the first delay information is determined based on first time information and second time information, the first time information is determined based on timestamp information of arrival of a data packet of the first granularity, and the second time information is current timestamp information. In another implementation, the first delay information is first time information, and the first time information is determined based on timestamp information of arrival of a data packet of the first granularity.

In some embodiments, an implementation of this step may be as follows: A first protocol layer obtains a data packet of the first granularity and records a timestamp at which the data packet arrives. When the first protocol layer transmits a data packet to a protocol layer lower than the first protocol layer, the first protocol layer transmits a timestamp corresponding to the data packet to the protocol layer lower than the first protocol layer. Then the first time information may be determined based on the timestamp of the data packet, and the first time information may be used for determining the first delay information. A specific implementation process may be as follows:
S3010: Obtain a data packet of the first granularity, and record a timestamp at which the data packet arrives.

Specifically, the first protocol layer may obtain a data packet of the first granularity and record a timestamp at which the data packet arrives at the first protocol layer. Each data packet of the first granularity at the first protocol layer has corresponding timestamp information. To be specific, when the first protocol layer receives a data packet of the first granularity, the first protocol layer may record, for the received data packet, time information when the data packet arrives at the first protocol layer. For example, after obtaining a data packet 1 of the first granularity, the first protocol layer records a timestamp 1 at which the data packet 1 arrives at the first protocol layer; and after obtaining a data packet 2 of the first granularity, the first protocol layer records a timestamp 2 at which the data packet 2 arrives at the first protocol layer.

The timestamp may include at least one of the following: a system frame number, subframe information, slot information, and symbol information.

The first protocol layer may obtain a data packet of the first granularity. To be specific, the first protocol layer receives a data packet, and the data packet belongs to the first granularity. It should be noted that the first granularity may include at least one data packet. Therefore, the data packet of the first granularity may be one data packet of the first granularity, a plurality of data packets of the first granularity, or all data packets of the first granularity. The first protocol layer may be an SDAP layer, a PDCP layer, an RLC layer, or another protocol layer. This is not limited in this application. The first granularity may be an RLC entity, an RLC entity group including a plurality of RLC entities, a logical channel LCH, an LCH group including a plurality of LCHs, a PDU set, and a data burst data burst. Alternatively, the first granularity may be another entity, set, or the like that includes one or more data packets.

FIG. 3B is used as an example. The first protocol layer may be a PDCP layer, and the first granularity may be a PDU set. The PDCP layer may obtain data packets SDU1, SDU2, and SDU3 in the PDU set. The PDCP layer may record a timestamp 1 at which the SDU1 arrives at the PDCP layer, record a timestamp 2 at which the SDU2 arrives at the PDCP layer, and record a timestamp 3 at which the SDU3 arrives at the PDCP layer.

S3011: Transmit a timestamp corresponding to the data packet.

Specifically, when the first protocol layer transmits a data packet to a protocol layer (for example, a second protocol layer) lower than the first protocol layer, the first protocol layer transmits a timestamp corresponding to the data packet to a protocol layer at which the data packet is located. To be specific, a protocol layer receiving the data packet sent by the first protocol layer also obtains the timestamp of the data packet. The first protocol layer sends the data packet and the timestamp corresponding to the data packet to a protocol layer lower than the first protocol layer.

In an implementation, when a first condition is met, the first protocol layer may transmit a data packet, and/or may transmit a timestamp corresponding to a data packet. The transmitting a data packet may be understood as follows: (1) The first protocol layer sends the data packet to the second protocol layer. (2) A protocol layer lower than the first protocol layer receives the data packet sent by the first protocol layer. The transmitting a timestamp corresponding to a data packet may be understood as follows: (1) The first protocol layer sends the timestamp of the data packet to the second protocol layer. (2) A protocol layer lower than the first protocol layer receives the timestamp that corresponds to the data packet and that is sent by the first protocol layer. The first condition may include at least one of the following: a. The data packet has been transmitted to a protocol layer lower than the first protocol layer. b. Each protocol layer obtains second indication information, where the second indication information is used for indicating transmission of timer duration of the data packet, or indicating triggering of reporting of delay information. c. Reporting of delay information is triggered.

In a possible implementation, the first protocol layer and/or the second protocol layer and/or a third protocol layer learns that transmission of the data packet is completed or segmented transmission of the data packet is completed, and may delete or discard the timestamp corresponding to the data packet. The learning that transmission of the data packet is completed or segmented transmission of the data packet is completed specifically includes at least one of the following: learning that the data packet has been transmitted; learning that the data packet has been sent; learning that the data packet is successfully transmitted; learning that at least one piece of segmented data of the data packet has been transmitted; learning that at least one piece of segmented data of the data packet has been sent; or learning that at least one piece of segmented data of the data packet is successfully transmitted.

FIG. 3B is used as an example. When the PDCP layer transmits the SDU1 to an RLC layer, the PDCP layer transmits the timestamp 1 of the SDU1 to the RLC layer. When the PDCP layer transmits the SDU2 to the RLC layer, the PDCP layer transmits the timestamp 2 of the SDU2 to the RLC layer. When the PDCP layer transmits the SDU3 to the RLC layer, the PDCP layer transmits the timestamp 3 of the SDU3 to the RLC layer.

S3012: Obtain the first delay information of the first granularity based on the first time information and the second time information.

The first protocol layer, the second protocol layer, or the third protocol layer may determine the first time information based on the timestamp of the data packet. Then the first delay information of the first granularity may be obtained based on the first time information and the second time information. Alternatively, the first delay information may be the first time information.

The second time information may be understood as a current timestamp at which the first delay information is calculated, or may be understood as a current timestamp at which the first delay information is calculated. The second time information may be obtained by a transmit end, or may be obtained by a receive end. To be specific, the first delay information may be calculated by the transmit end, or may be calculated by the receive end. In this case, the second time information may be understood as a current timestamp obtained by the transmit end when the transmit end calculates the first delay information. Alternatively, the second time information may be understood as a current timestamp obtained by the receive end when the receive end calculates the first delay information.

In a possible implementation, a manner of determining the first time information based on the timestamp of the data packet may be as follows: The second protocol layer or the third protocol layer may obtain a data packet sent by the first protocol layer and a timestamp of the data packet that is sent by the first protocol layer. The second protocol layer or the third protocol layer may determine the first time information based on the received timestamp of the data packet. The first time information may include at least one of the following:
A timestamp of an earliest-arriving data packet of the first granularity: This may be understood as a timestamp corresponding to a data packet of the first granularity that arrives at the first protocol layer at the earliest time, or may be understood as a timestamp of a data packet of the first granularity that is earliest received by the first protocol layer. The earliest-arriving data packet of the first granularity may be understood as a data packet that is currently cached at the first protocol layer and that arrives at the first protocol layer at the earliest time.

In a possible implementation, when transmission of the data packet of the first granularity is completed or segmented transmission of the data packet is completed, the timestamp of the earliest-arriving data packet of the first granularity is a timestamp of an earliest-arriving data packet among data packets that are currently still cached at the first protocol layer.

In a possible implementation, when transmission of the data packet of the first granularity is completed or segmented transmission of the data packet is completed but the first protocol layer still caches the data packet, the timestamp of the earliest-arriving data packet of the first granularity is a timestamp of a data packet that arrives at the first protocol layer earliest among all data packets of the first granularity that are received by the protocol layer.

A median of timestamps of data packets of the first granularity: This may be understood as a median of timestamps that are recorded by the first protocol layer and at which data packets of the first granularity arrive at the first protocol layer, or may be understood as a median of timestamps of data packets of the first granularity that are received by the first protocol layer.

In a possible implementation, when transmission of the data packet of the first granularity is completed or segmented transmission of the data packet is completed, the median of the timestamps of the data packets of the first granularity is a median of timestamps of all data packets of the first granularity that are received by the first protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the median of the timestamps of the data packets of the first granularity is a median of timestamps of all data packets of the first granularity that are received by the protocol layer.

A timestamp of a start data packet of the first granularity: This may be understood as a timestamp that is recorded by the first protocol layer and at which the start data packet of the first granularity arrives at the first protocol layer, or may be understood as a timestamp of a start data packet of the first granularity that is received by the first protocol layer. For descriptions of the start data packet, refer to the foregoing descriptions. Details are not described herein again.

A timestamp of an end data packet of the first granularity: This may be understood as a timestamp that is recorded by the first protocol layer and at which the end data packet of the first granularity arrives at the first protocol layer, or may be understood as a timestamp of an end data packet of the first granularity that is received by the first protocol layer. For descriptions of the end data packet, refer to the foregoing descriptions. Details are not described herein again.

An average timestamp of data packets of the first granularity: This may be understood as an average value of timestamps that are recorded by the first protocol layer and at which data packets of the first granularity arrive at the first protocol layer, or may be understood as an average value of timestamps of data packets of the first granularity that are received by the first protocol layer.

In a possible implementation, when transmission of the data packet of the first granularity is completed or segmented transmission of the data packet is completed, the average timestamp of the data packets of the first granularity is an average timestamp of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the average timestamp of the data packets of the first granularity is an average timestamp of all data packets of the first granularity that are received by the protocol layer.

A timestamp of each data packet of the first granularity: This may be understood as a timestamp at which each data packet of the first granularity arrives at the first protocol layer, or may be understood as a timestamp at which the first protocol layer receives each data packet of the first granularity.

In a possible implementation, when transmission of the data packet of the first granularity is completed or segmented transmission of the data packet is completed, the timestamp of each data packet of the first granularity is timestamps of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the timestamp of each data packet of the first granularity is timestamps of all data packets of the first granularity that are received by the protocol layer.

A timestamp of any data packet of the first granularity: This may be understood as a timestamp at which any data packet of the first granularity arrives at the first protocol layer, or may be understood as a timestamp at which the first protocol layer receives any data packet of the first granularity.

In a possible implementation, when transmission of the data packet of the first granularity is completed or segmented transmission of the data packet is completed, the timestamp of any data packet of the first granularity is a timestamp of any one of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the timestamp of any data packet of the first granularity is a timestamp of any data packet of the first granularity that is received by the protocol layer.

An earliest timestamp of data packets of the first granularity: This may be understood as an earliest timestamp at which a data packet of the first granularity arrives at the first protocol layer, or may be understood as an earliest timestamp at which the first protocol layer receives a data packet of the first granularity.

In a possible implementation, when transmission of the data packet of the first granularity is completed or segmented transmission of the data packet is completed, the earliest timestamp of the data packets of the first granularity is an earliest timestamp of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the earliest timestamp of the data packets of the first granularity is an earliest timestamp of data packets of the first granularity that are received by the protocol layer.

Any timestamp of data packets of the first granularity: This may be understood as any timestamp at which a data packet of the first granularity arrives at the first protocol layer, or may be understood as any timestamp at which the first protocol layer receives a data packet of the first granularity.

In a possible implementation, when transmission of the data packet of the first granularity is completed or segmented transmission of the data packet is completed, the any timestamp of the data packets of the first granularity is any timestamp of all data packets of the first granularity that are received by the protocol layer and whose transmission has not been completed or whose segmented transmission has not been completed.

In a possible implementation, when transmission of the data packet of the first granularity is completed or segmented transmission of the data packet is completed but the first protocol layer still caches the data packet, the any timestamp of the data packets of the first granularity is any timestamp of data packets of the first granularity that are received by the protocol layer.

FIG. 3B is used as an example. A MAC layer may obtain the data packets SDU1, SDU2, and SDU3, the timestamp 1 of the SDU1, the timestamp 2 of the SDU2, and the timestamp 3 of the SDU3. For example, an implementation of determining, by the MAC layer, the first time information based on the timestamps of the plurality of data packets may be as follows:

In a possible implementation, when a data packet of the first granularity that earliest arrives at the PDCP layer is the SDU1, the MAC layer determines that the first time information is the timestamp 1 of the SDU1.

In a possible implementation, an average timestamp at which a data packet of the first granularity arrives at the PDCP layer is (the timestamp 1 + the timestamp 2 + the timestamp 3)/3. The MAC layer may determine the average timestamp as the first time information.

In a possible implementation, time at which the SDU1 arrives at the first protocol layer is earlier than that of the SDU2, and the time at which the SDU2 arrives at the first protocol layer is earlier than that of the SDU3. When transmission of the data packet SDU1 of the first granularity is completed or segmented transmission of the data packet is completed, the timestamp of the earliest-arriving data packet of the first granularity is a timestamp of an earliest-arriving data packet among data packets that are currently still cached at the first protocol layer. To be specific, the first time information is the timestamp of the SDU2.

In a possible implementation, time at which the SDU1 arrives at the first protocol layer is earlier than that of the SDU2, and the time at which the SDU2 arrives at the first protocol layer is earlier than that of the SDU3. When transmission of the data packet of the first granularity is completed or segmented transmission of the data packet is completed at the first protocol layer but the first protocol layer still caches the data packet, the timestamp of the earliest-arriving data packet of the first granularity is a timestamp of a data packet that arrives at the first protocol layer earliest among all data packets of the first granularity that are received by the protocol layer. To be specific, the first time information is the timestamp of the SDU1.

In a possible implementation, when transmission of the SDU1 of the first granularity is completed or segmented transmission of the data packet is completed at the first protocol layer, the median of the timestamps of the data packets of the first granularity is a median of timestamps of all data packets of the first granularity that are received by the first protocol layer and whose transmission has not been completed or whose segmented transmission has not been completed. To be specific, the first time information is a median of the timestamp of the SDU2 and the timestamp of the SDU3.

In a possible implementation, when transmission of the SDU1 of the first granularity is completed or segmented transmission of the data packet is completed at the first protocol layer but the first protocol layer still caches the data packet, the median of the timestamps of the data packets of the first granularity is a median of timestamps of all data packets of the first granularity that are received by the protocol layer. To be specific, the first time information is a median of the timestamp of the SDU1, the timestamp of the SDU2, and the timestamp of the SDU3.

In a possible implementation, when the SDU1 is a start data packet of the first granularity, the first time information is the timestamp of the SDU1.

In a possible implementation, when the SDU3 is an end data packet of the first granularity, the first time information is the timestamp of the SDU3.

The following describes an indication information transmission method provided in embodiments of this application.

In the method, after learning that transmission of a data packet of a first granularity is completed, a first protocol layer and/or a second protocol layer may stop a timer corresponding to the data packet, or delete or discard a timestamp corresponding to the data packet. The stopping a timer corresponding to the data packet may be stopping a first timer for the data packet and/or stopping a second timer for the data packet. The stopping a timer corresponding to the data packet may be understood as that a protocol layer no longer maintains the timer corresponding to the data packet. The no longer maintaining the timer corresponding to the data packet may be understood as stopping the timer corresponding to the data packet. Therefore, delay information of the corresponding data packet cannot be obtained based on the timer. The no longer maintaining the timer corresponding to the data packet may also be understood as that the protocol layer deletes or discards the timer corresponding to the data packet. It should be noted that the timer corresponding to the data packet may include at least one of the following: the first timer for the data packet, or the second timer corresponding to the data packet. The deleting or discarding a timestamp corresponding to the data packet may be understood as that a protocol layer recording the timestamp of the data packet clears timestamp information at the protocol layer. To be specific, the protocol layer no longer stores the timestamp of the data packet, and a protocol layer lower than the protocol layer cannot obtain the timestamp of the data packet from the protocol layer.

As shown in FIG. 4A and FIG. 4B, the method may specifically include the following steps.

S400: Indicate first information when it is learned that transmission of a data packet of a first granularity is completed, where the first information is used for indicating at least one of the following information: that transmission of the data packet is completed; indicating to stop a timer corresponding to the data packet; or deleting or discarding a timestamp corresponding to the data packet.

Specifically, a specific implementation of step S400 may be as follows:

S4001: Indicate first information when it is learned that transmission of a data packet of a first granularity is completed, where the first information may be used for indicating at least one of the following information: that transmission of the data packet is completed; indicating to stop a timer corresponding to the data packet; or deleting or discarding a timestamp corresponding to the data packet. Specifically, transmission of the data packet of the first granularity is completed, and the indicating first information may include at least one of the following: (1) When the data packet is not transmitted in a segmented manner, at least one of the following may be included:
The first information is indicated when it is learned that the data packet has been transmitted.

In an implementation, that the data packet has been transmitted means that the data packet has been transmitted to a lower layer. This may be understood as that a first protocol layer of a transmit end transmits the data packet to a second protocol layer, where the second protocol layer is lower than the first protocol layer.

The first information is indicated when it is learned that the data packet has been sent.

In an implementation, that the data packet has been sent means that the data packet is sent to a receive end. This may be understood as that the transmit end has sent the data packet but the transmit end does not care whether the data packet is successfully received at the receive end. This is usually a transparent transmission mode or an unacknowledged mode.

The first information is indicated when it is learned that the data packet is successfully transmitted.

In an implementation, that the data packet is successfully transmitted means that the data packet is successfully transmitted to the receive end. This may be understood as that, after sending the data packet, the transmit end may determine whether the receive end correctly receives the data packet. This is usually an acknowledged mode or HARQ transmission.

(2) When the data packet needs to be transmitted in a segmented manner, at least one of the following may be included: The first information is indicated when it is learned that at least one piece of segmented data of the data packet has been transmitted.

In an implementation, that at least one piece of segmented data of the data packet has been transmitted means that the data packet has been transmitted to a lower layer. This may be understood as that a first protocol layer of a transmit end transmits at least one piece of segmented data of the data packet to a second protocol layer, where the second protocol layer is lower than the first protocol layer. That at least one piece of segmented data of the data packet has been transmitted may include: One piece of segmented data of the data packet has been transmitted, or a plurality of pieces of segmented data of the data packet have been transmitted, or all segmented data of the data packet has been transmitted.

The first information is indicated when it is learned that at least one piece of segmented data of the data packet has been sent.

In an implementation, that at least one piece of segmented data of the data packet has been sent means that at least one piece of segmented data of the data packet is sent to a receive end. This may be understood as that the transmit end has sent at least one piece of segmented data of the data packet but the transmit end does not care whether the data packet is successfully received at the receive end. This is usually a transparent transmission mode or an unacknowledged mode. That at least one piece of segmented data of the data packet has been sent may include: One piece of segmented data of the data packet has been sent, or a plurality of pieces of segmented data of the data packet have been sent, or all segmented data of the data packet has been sent.

The first information is indicated when it is learned that at least one piece of segmented data of the data packet is successfully transmitted.

In an implementation, that at least one piece of segmented data of the data packet is successfully transmitted means that the data packet is successfully transmitted to the receive end. This may be understood as that, after sending at least one piece of segmented data of the data packet, the transmit end may determine whether the receive end correctly receives the at least one piece of segmented data of the data packet. This is usually an acknowledged mode or HARQ transmission. That at least one piece of segmented data of the data packet is successfully transmitted may include: One piece of segmented data of the data packet is successfully transmitted, or a plurality of pieces of segmented data of the data packet are successfully transmitted, or all segmented data of the data packet is successfully transmitted.

In the foregoing learning manners, a protocol layer may learn that transmission of the data packet is completed or segmented transmission of the data packet is completed, or a protocol layer may obtain the first information, where the first information indicates that transmission of the data packet is completed or segmented transmission of the data packet is completed.

When the data packet needs to be transmitted in a segmented manner, at least one piece of segmented data of the data packet has been transmitted to a lower layer, or at least one piece of segmented data of the data packet has been sent to the receive end, or it is learned that at least one piece of segmented data of the data packet is successfully transmitted to the receive end. For descriptions of the lower layer herein, refer to the foregoing descriptions. That at least one piece of segmented data of the data packet has been sent to the receive end may be understood as that the receive end has received the at least one piece of segmented data of the data packet that is sent by the transmit end. That the data packet is successfully transmitted to the receive end may be understood as that the receive end has received the at least one piece of segmented data of the data packet and has verified the segmented data to determine that information of the segmented data is complete and correct. The at least one piece of segmented data of the data packet herein may include one piece of segmented data of the data packet, a plurality of pieces of segmented data of the data packet, or all segmented data of the data packet.

When learning that transmission of the data packet of the first granularity is completed, the lower layer may send the first information to a protocol layer higher than the lower layer. To be specific, the protocol layer higher than the lower layer may obtain the first information sent by the lower layer. The first information is used for indicating that transmission of the data packet is completed or segmented transmission of the data packet is completed. For example, when a protocol layer lower than the first protocol layer learns that transmission of the data packet of the first granularity is completed, the first protocol layer may obtain the first information sent by the protocol layer lower than the first protocol layer. The first information is used for indicating that transmission of the data packet is completed or segmented transmission of the data packet is completed.

In a possible implementation, the transmit end may receive acknowledgement ACK information sent by the receive end for the data packet, to determine that the data packet is successfully transmitted to the receive end; or obtain acknowledgement ACK information for at least one piece of segmented data of the data packet, to determine that the at least one piece of segmented data of the data packet is successfully transmitted to the receive end. Then the lower layer may send the first information to a protocol layer higher than the lower layer.

S4002: After the first information is obtained, stop a timer corresponding to the data packet, or delete or discard a timestamp corresponding to the data packet.

Specifically, after obtaining the first information from the lower layer, the first protocol layer and/or the second protocol layer may stop the timer (for example, a first timer or a second timer) for the data packet, delete duration recorded by the timer, or delete or discard the timestamp of the data packet. That the first protocol layer and/or the second protocol layer obtain/obtains the first information from the lower layer may be understood as that the first protocol layer and/or the second protocol layer obtain/obtains the first information from the lower layer, or may be understood as that the lower layer notifies the first protocol layer and/or the second protocol layer of the first information. The timer for the data packet may include the first timer and/or the second timer. For descriptions of stopping the timer for the data packet and descriptions of deleting or discarding the timestamp of the data packet, refer to the foregoing descriptions. Details are not described herein again. The first protocol layer and the second protocol layer may be understood as protocol layers at which the timer for the data packet or the timestamp of the data packet is maintained.

In a possible implementation, the first timer for the data packet or the timestamp of the data packet is maintained at the first protocol layer. After obtaining the first information, the first protocol layer may stop the first timer corresponding to the data packet or delete the timestamp corresponding to the data packet. In a possible implementation, after obtaining the first information, the first protocol layer may send the first information to a fourth protocol layer. The fourth protocol layer is higher than the first protocol layer, so that the fourth protocol layer stops the timer corresponding to the data packet or deletes the timestamp of the data packet based on the first information.

In a possible implementation, when obtaining second indication information, the first protocol layer and/or the second protocol layer may stop the timer (for example, a first timer or a second timer) for the data packet, delete duration recorded by the timer, or delete or discard the timestamp of the data packet. The second indication information is used for indicating transmission of timer duration of a first data packet, or indicating triggering of reporting of delay information.

In a possible implementation, after obtaining the first information from the lower layer, the first protocol layer and/or the second protocol layer may alternatively start a count timer. When duration recorded by the count timer is greater than a preset specified threshold, the protocol layer stops the timer (for example, the first timer or the second timer) for the data packet, or deletes or discards the timestamp of the data packet.

It can be understood that, when transmission of the earliest-arriving first data packet of the first granularity is completed and transmission of a second data packet is not completed, after the protocol layer deletes a timer for the first data packet and duration corresponding to the timer, during calculation of first delay information, an earliest-arriving data packet of the first granularity is no longer the first data packet, but is the second data packet. Arrival time of the second data packet is later than that of the first data packet and is earlier than that of data packets of the first granularity other than the first data packet and the second data packet.

FIG. 1A is used as an example. When an SDU1 is transmitted to a MAC layer, or the SDU1 has been sent to a receive end, or a transmit end receives acknowledgement ACK information that is sent by the receive end and that corresponds to the SDU1, the MAC layer may send first information to a PDCP layer, to indicate that transmission of the SDU1 is completed. The PDCP layer may no longer maintain a first timer T1 for the SDU1. It can be understood that, when time at which the SDU1 arrives at the PDCP is earlier than that of an SDU2, the time at which the SDU2 arrives at the PDCP is earlier than that of an SDU3, and transmission of the SDU1 is completed, during calculation of first delay information, an earliest-arriving data packet of the first granularity is no longer the SDU1, but is the SDU2.

FIG. 2B is used as an example. When an SDU1 is transmitted to a MAC layer, or the SDU1 has been sent to a receive end, or a transmit end obtains acknowledgement ACK information that is sent by the receive end and that corresponds to the SDU1, the MAC layer may send first information to a PDCP layer and an RLC layer, to indicate that transmission of the SDU1 is completed. The PDCP layer may delete a first timer T1 for the SDU1 and duration D1 of the first timer T1. The RLC layer may delete a second timer S1 for the SDU1 and duration M1 of the second timer S1. It can be understood that, when time at which the SDU1 arrives at the RLC layer is earlier than that of an SDU2 and transmission of the SDU1 is completed, during calculation of first delay information, an earliest-arriving data packet of the first granularity at the RLC layer is no longer the SDU1, but is the SDU2.

FIG. 3B is used as an example. When an SDU1 is transmitted to a MAC layer, or the SDU1 has been sent to a receive end, or a transmit end obtains acknowledgement ACK information that is sent by the receive end and that corresponds to the SDU1, the MAC layer may send first information to a PDCP layer, to indicate that transmission of the SDU1 is completed. The PDCP layer may delete a timestamp 1 of the SDU1.

The following describes a delay information sending method provided in embodiments of this application.

In the method, a third protocol layer may receive third delay information sent by a first protocol layer or a second protocol layer. The third delay information may be understood as duration. In a possible implementation, the third delay information may be the first delay information in the foregoing embodiments. In a possible implementation, the third protocol layer may alternatively receive the third delay information and first granularity information. The first granularity information includes an identifier corresponding to a first granularity, and the first granularity information is used for indicating the first granularity. Then, after receiving the third delay information or receiving the third delay information and the first granularity information, the protocol layer may obtain first indication information and report the first indication information based on a first uplink resource.

The first indication information is used for indicating delay information of a second granularity. The delay information of the second granularity includes second delay information of the first granularity or third time information of the first granularity. The third time information may be understood as timestamp information of the first granularity. In a possible implementation, the third time information may be the first time information in the foregoing embodiments. The first indication information indicates at least one of the following: a value of the second delay information, a value of the third time information, a value range of the second delay information, or a value range of the third time information. The second delay information of the first granularity may be understood as a latest remaining delay of the first granularity or a latest remaining delay of a data packet of the first granularity when it is learned that the first uplink resource reports the first indication information. The second delay information of the first granularity is related to a first delay information of the first granularity. To be specific, the first delay information may be the same as or different from the second delay information. The first uplink resource may be understood as an uplink resource used for sending the first indication information.

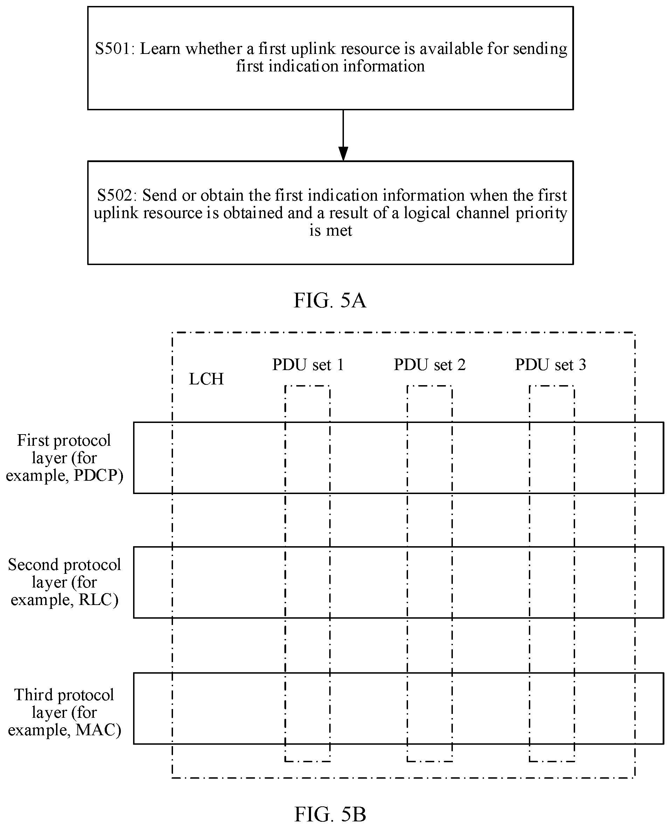

As shown in FIG. 5A, a specific process of the method may include the following steps.

S501: Learn whether a first uplink resource is available for sending first indication information.

Specifically, a third protocol layer may determine whether a first uplink resource used for reporting first indication information is obtained, where the third protocol layer may be understood as a protocol layer for sending the first indication information.

In a possible implementation, the second granularity corresponds to at least one piece of delay information. For example, a first protocol layer transmits first delay information of a first granularity to a second protocol layer, and the second protocol layer transmits delay information of the second granularity to the protocol layer for sending the first indication information. The first granularity is transmitted in the second granularity, or a granularity of the second granularity is greater than a granularity of the first granularity. To be specific, the second granularity may include a plurality of first granularities. In this case, the delay information of the second granularity may include first delay information of a plurality of first granularities. To be specific, the second granularity may correspond to a plurality of pieces of delay information. As shown in FIG. 5B, the second granularity is an LCH, and the first granularity is a PDU set 1, a PDU set 2, and a PDU set 3. In this case, the delay information of the second granularity includes first delay information of the PDU set 1, first delay information of the PDU set 2, and first delay information of the PDU set 3.

It should be noted that the second granularity includes at least one of the following: a radio link control protocol layer RLC entity, an RLC entity group including a plurality of RLC entities, a logical channel LCH, an LCH group including a plurality of LCHs, a PDU set, and a data burst data burst.

When the second granularity is an RLC entity, the first granularity includes at least one of the following: an LCH, a data burst, and a PDU set.

When the second granularity is a data burst, the first granularity includes a PDU set.

When the second granularity is an LCH, the first granularity includes at least one of the following: a data burst and a PDU set.

When the second granularity is an RLC entity group, the first granularity includes at least one of the following: an RLC entity, an LCH, a data burst, and a PDU set.

When the second granularity is an LCH group, the first granularity includes at least one of the following: an LCH, a data burst, and a PDU set.

S502: Send or obtain the first indication information when the first uplink resource is obtained and a result of a logical channel priority is met.

The first indication information is used for indicating the delay information of the second granularity. The delay information includes second delay information of the first granularity or third time information of the first granularity. The first indication information indicates at least one of the following: a value of the second delay information, a value of the third time information, a value range of the second delay information, or a value range of the third time information.

The first granularity may be the same as or different from the second granularity.

In a possible implementation, when the third protocol layer determines that the first uplink resource is obtained and the result of the logical channel priority is met, the third protocol layer obtains third delay information, obtains the first indication information based on the third delay information of the first granularity, and reports the first indication information. In this case, the second delay information is the same as the third delay information.

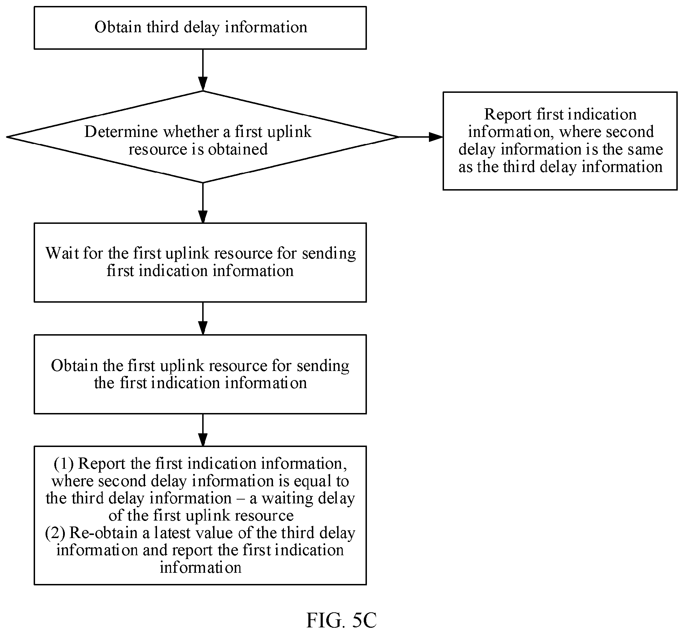

In a possible implementation, as shown in FIG. 5C, before obtaining the first uplink resource, the third protocol layer obtains the third delay information, and obtains the first indication information based on the third delay information. When the first indication information is obtained, whether the first uplink resource is obtained is determined. When it is determined that the first uplink resource is obtained and the result of the logical channel priority is met, the first indication information is reported; or a latest value of the third delay information is obtained again, and the first indication information is reported. In this case, the second delay information is the same as the third delay information. When it is determined that no first uplink resource is obtained, the first uplink resource is waited for until the first uplink resource is obtained, and then the first indication information is reported. In this case, the second delay information is determined based on the third delay information and a waiting delay of the first uplink resource: the third delay information - the waiting delay of the first uplink resource.

In a possible implementation, when it is determined that the first uplink resource is obtained and the result of the logical channel priority is met, the third delay information is obtained based on the third time information and the fourth time information. Then the first indication information may be obtained based on the third delay information and reported. In this case, the third delay information is the same as the second delay information. The fourth time information is a current timestamp when the first uplink resource is obtained or after the first uplink resource is obtained. In a possible implementation, the fourth time information is the same as the second time information in the foregoing embodiments. A calculation method for the third delay information may be: the fourth time information - the third time information. The third protocol layer may obtain the first indication information based on the third delay information and report the first indication information to a receive end.

In a possible implementation, when it is determined that the first uplink resource is obtained, the first indication information is obtained based on the third time information and is reported to the receive end. After obtaining the first indication information, the receive end may obtain the third delay information based on the third time information and the fourth time information. The fourth time information is a current timestamp when the receive end obtains the first indication information or after the receive end obtains the first indication information. A calculation method for the third delay information may be: the fourth time information - the third time information.

In a possible implementation, the first indication information may further include: a data format of the first indication information, first granularity information, cache data volume information, a reserved field, and the like. The data format of the first indication information may be identified by a first identifier. The first identifier may be a logical channel identifier LCID, used for identifying a logical channel corresponding to the first indication information.

FIG. 1A is used as an example. The third protocol layer may be a MAC layer for performing this step. For example, the second delay information is 3 milliseconds. When the first indication information is used for indicating the value of the second delay information, the first indication information indicates that the second delay information is 3 milliseconds. When the first indication information is used for indicating the value range of the second delay information, the transmit end may obtain, through pre-division, a plurality of value ranges, for example, 0-2 milliseconds, 2-4 milliseconds, and 4-6 milliseconds. The second delay information, namely, 3 milliseconds, falls within the value range of 2-4 milliseconds. Therefore, the first indication information indicates that the value range of the second delay information is 2-4 milliseconds. The value range of the second delay information and a manner of reporting the first indication information in this case may be shown in Table 1.

**Table 1**

| First indication information | Second delay information (ms) |
|---|---|
| 0 | 0-2 |
| 1 | 2-4 |
| 2 | 4-6 |

It can be learned from Table 1 that, when the value of the second delay information falls within the range of 0-2 milliseconds, an identifier of the first indication information may be "0", indicating that the value range of the second delay information falls within the range of 0-2 milliseconds; when the value of the second delay information falls within the range of 2-4 milliseconds, an identifier of the first indication information may be "1", indicating that the value range of the second delay information falls within the range of 2-4 milliseconds; or when the value of the second delay information falls within the range of 4-6 milliseconds, an identifier of the first indication information may be "2", indicating that the value range of the second delay information falls within the range of 4-6 milliseconds. It should be noted that Table 1 is merely an example for describing this application and does not constitute a limitation on this application.

FIG. 2B is used as an example. The third protocol layer may be a MAC layer for performing this step. For example, the second delay information is 3 milliseconds. When the first indication information is used for indicating the value of the second delay information, the first indication information indicates that the second delay information is 3 milliseconds. When the first indication information is used for indicating the value range of the second delay information, the transmit end may obtain, through pre-division, a plurality of value ranges, for example, 0-2 milliseconds, 2-4 milliseconds, and 4-6 milliseconds. The second delay information, namely, 3 milliseconds, falls within the value range of 2-4 milliseconds. Therefore, the first indication information indicates that the value range of the second delay information is 2-4 milliseconds. The value range of the second delay information and a manner of reporting the first indication information in this case may be shown in Table 2.

**Table 2**

| First indication information | Second delay information (ms) |
|---|---|
| 0 | 0-2 |
| 1 | 2-4 |
| 2 | 4-6 |

It can be learned from Table 2 that, when the value of the second delay information falls within the range of 0-2 milliseconds, an identifier of the first indication information may be "0", indicating that the value range of the second delay information falls within the range of 0-2 milliseconds; when the value of the second delay information falls within the range of 2-4 milliseconds, an identifier of the first indication information may be "1", indicating that the value range of the second delay information falls within the range of 2-4 milliseconds; or when the value of the second delay information falls within the range of 4-6 milliseconds, an identifier of the first indication information may be "2", indicating that the value range of the second delay information falls within the range of 4-6 milliseconds. It should be noted that Table 2 is merely an example for describing this application and does not constitute a limitation on this application.

FIG. 3B is used as an example. The third protocol layer may be a MAC layer for performing this step. For example, the second delay information is 3 milliseconds. When the first indication information is used for indicating the value of the second delay information, the first indication information indicates that the second delay information is 3 milliseconds. When the first indication information is used for indicating the value range of the second delay information, the transmit end may obtain, through pre-division, a plurality of value ranges, for example, 0-2 milliseconds, 2-4 milliseconds, and 4-6 milliseconds. The second delay information, namely, 3 milliseconds, falls within the value range of 2-4 milliseconds. Therefore, the first indication information indicates that the value range of the second delay information is 2-4 milliseconds. The value range of the second delay information and a manner of reporting the first indication information in this case may be shown in Table 3.

**Table 3**

| First indication information | Second delay information (ms) |
|---|---|
| 0 | 0-2 |
| 1 | 2-4 |
| 2 | 4-6 |

It can be learned from Table 3 that, when the value of the second delay information falls within the range of 0-2 milliseconds, an identifier of the first indication information may be "0", indicating that the value range of the second delay information falls within the range of 0-2 milliseconds; when the value of the second delay information falls within the range of 2-4 milliseconds, an identifier of the first indication information may be "1", indicating that the value range of the second delay information falls within the range of 2-4 milliseconds; or when the value of the second delay information falls within the range of 4-6 milliseconds, an identifier of the first indication information may be "2", indicating that the value range of the second delay information falls within the range of 4-6 milliseconds. It should be noted that Table 3 is merely an example for describing this application and does not constitute a limitation on this application.

In some embodiments, in this application, the method 1 in the delay information determining method may be implemented to obtain first delay information, and then the indication information transmission method may be implemented to stop a timer of a data packet whose transmission is completed at a protocol layer, and then the delay information sending method may be implemented to report the first delay information.

In some embodiments, in this application, the method 1 in the delay information determining method may be implemented to obtain first delay information, and then the delay information sending method may be implemented to report the first delay information, and then the indication information transmission method may be implemented to stop a timer of a data packet whose transmission is completed at a protocol layer.

In some embodiments, in this application, the method 2 in the delay information determining method may be implemented to obtain first time information, and then the indication information transmission method may be implemented to delete or discard a timestamp of a data packet at a protocol layer, and then the delay information sending method may be implemented to report the first time information.

In some embodiments, in this application, the method 2 in the delay information determining method may be implemented to obtain first time information, and then the delay information sending method may be implemented to report the first time information, and then the indication information transmission method may be implemented to delete or discard a timestamp of a data packet at a protocol layer.

In some embodiments, in this application, the method 2 in the delay information determining method may be implemented to obtain first delay information, and then the indication information transmission method may be implemented to stop a timer of a data packet whose transmission is completed at a protocol layer, and then the delay information sending method may be implemented to report the first delay information.

In some embodiments, in this application, the method 2 in the delay information determining method may be implemented to obtain first delay information, and then the delay information sending method may be implemented to report the first delay information, and then the indication information transmission method may be implemented to stop a timer of a data packet whose transmission is completed at a protocol layer.

To be specific, a time sequence in which the delay information determining method, the indication information transmission method, and the delay information sending method are combined is not limited in this application.

In a possible implementation, a transmit end that sends first indication information may obtain configuration information sent by a receive end. The configuration information is used for indicating to configure at least one of the following: a first timer, second indication information, information for indicating to calculate a remaining delay, first threshold information, first information, or the like.

The following describes a product form of user equipment provided in embodiments of this application.

It should be understood that any product form having a function of the user equipment falls within the protection scope of embodiments of this application. It should be further understood that the following descriptions are merely examples, and a product form of a transmit end in embodiments of this application is not limited therefore.

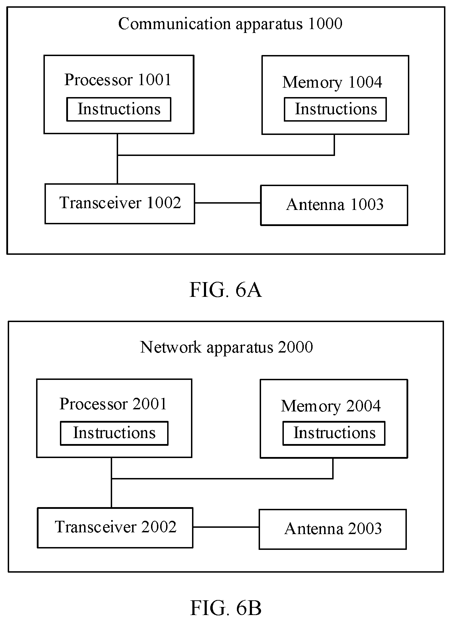

In a possible product form, the transmit end in embodiments of this application may be implemented by using a general bus architecture. FIG. 6A is a diagram of a structure of a communication apparatus 1000 according to an embodiment of this application. The communication apparatus 1000 may be a transmit end or an apparatus in the transmit end.

As shown in FIG. 6A, the communication apparatus 1000 includes a processor 1001, a transceiver 1002 that is internally connected to and communicates with the processor, an antenna 1003, and a memory 1004.

The processor 1001 is a general-purpose processor, a dedicated processor, or the like. For example, the processor 1001 may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), execute a computer program, and process data of the computer program.

The transceiver 1002 may be referred to as a transceiver unit, a transceiver device, a transceiver circuit, or the like, and is configured to implement a transceiver function. The transceiver 1002 may include a receiver and a transmitter. The receiver may be referred to as a receiving device, a receiver circuit, or the like, and is configured to implement a receiving function. The transmitter may be referred to as a transmitting device, a transmitter circuit, or the like, and is configured to implement a sending function.

The communication apparatus 1000 may further include the antenna 1003 and/or a radio frequency unit (not shown in the figure). The antenna 1003 and/or the radio frequency unit may be located in the communication apparatus 1000 or may be separated from the communication apparatus 1000. To be specific, the antenna 1003 and/or the radio frequency unit may be deployed in a remote or distributed manner. The antenna 1003 may be configured to transmit and receive an electromagnetic wave signal.

The communication apparatus 1000 may include one or more memories 1004. The memory 1004 may store instructions. The instructions may be computer programs. The computer programs may be run on the communication apparatus 1000, so that the communication apparatus 1000 performs the method in the foregoing method embodiments. Optionally, the memory 1004 may further store data. The communication apparatus 1000 and the memory 1004 may be disposed separately, or may be integrated.

The processor 1001, the transceiver 1002, and the memory 1004 may be connected through a communication bus.

A scope of the communication apparatus described in this application is not limited thereto, and a structure of the communication apparatus may not be limited to FIG. 6A. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may also include a storage component configured to store data and a computer program;
(3) an ASIC, for example, a modem (Modem);
(4) a module that can be embedded in another device;
(5) a receiver, a terminal, a smart terminal, a cellular phone, a wireless device, a handheld device, a mobile unit, an in-vehicle device, a network device, a cloud device, an artificial intelligence device, or the like; or
(6) others.

The following describes a network apparatus 2000 that enables a network device (for example, a base station) to implement the uplink time-domain resource management method provided in this application.

The network apparatus 2000 shown in FIG. 6B may be the receive end in embodiments of this application, or may be a component for implementing the foregoing methods in the receive end, or may be a chip used in an access network device. The chip may be a system-on-a-chip (System-On-a-Chip, SOC), a baseband chip having a communication function, or the like.

As shown in FIG. 6B, the network apparatus 2000 includes a processor 2001 and a transceiver 2002 that is internally connected to and communicates with the processor. Optionally, the network apparatus 2000 may further include an antenna 2003 and/or a radio frequency unit (not shown in the figure). Optionally, the network apparatus 2000 may include one or more memories 2004. The memory 2004 may store instructions. The instructions may be computer programs. The computer programs may be run on the network apparatus 2000, so that the network apparatus 2000 performs the method in the foregoing method embodiments.

The processor in this embodiment of this application may include, but is not limited to, at least one of the following: various types of computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform an operation or processing. The processor may be a separate semiconductor chip, or may be integrated into a semiconductor chip with another circuit. For example, the processor may form a SoC (system-on-a-chip) with another circuit (for example, an encoding and decoding circuit, a hardware acceleration circuit, or various buses and interface circuits), or may be integrated into an ASIC as a built-in processor of the ASIC. The ASIC integrated with the processor may be packaged separately or packaged with another circuit. In addition to the core for executing a software instruction to perform an operation or processing, the processor may further include a necessary hardware accelerator, for example, a field programmable gate array (field programmable gate array, FPGA), a PLD (programmable logic device), or a logic circuit for implementing a dedicated logic operation.

The memory in this embodiment of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmabler-only memory, EEPROM). In some scenarios, the memory may be a compact disc read-only memory (compact disc read-only memory, CD ROM) or another compact disc storage, an optical disc storage (including a compressed optical disc, a laser disc, an optical disc, a digital versatile optical disc, a Blu-ray disc, or the like), a magnetic disk storage medium or another magnetic storage device, or any other medium that can be configured to carry or store expected program code in the form of an instruction or a data structure and that can be accessed by a computer, but is not limited thereto.

It should be noted that a first protocol layer (for example, a PDCP layer) may be configured to maintain a timer for each SDU, stop the timer when receiving first information used for indicating that transmission of the data packet is completed, determine minimum remaining delay information or remaining delay information for each granularity when delay reporting is triggered, and transmit the minimum remaining delay information of each granularity to a second protocol layer (for example, an RLC layer); the second protocol layer may maintain a timer for each SDU, stop the timer at the protocol layer when the SDU is transmitted to a third protocol layer, determine remaining delay information for each granularity when delay reporting is triggered, determine minimum remaining delay information for each granularity, transmit the minimum remaining delay information of each granularity, and indicate information to the first protocol layer (for example, the PDCP layer) if a PDU at the PDCP layer has been transmitted; and the third protocol layer (for example, a MAC layer) may obtain latest remaining delay information from the first protocol layer, or the third protocol layer calculates latest remaining delay information. A granularity of reporting may be a PDU set, a data burst, an LCH, or a logical channel group LCG. A granularity of calculating remaining delay information may be a PDU set, a data burst, an LCH, or the like.

In a possible implementation, a data packet of a first granularity may be completely sent within only one threshold. Therefore, the first granularity may correspond to one timer. Delay information of the first granularity may be delay information of the timer. First delay information is obtained by subtracting the delay information of the timer from a first threshold. The delay information of the timer may be understood as cache duration or maintenance duration of a plurality of data packets of the first granularity at a protocol layer.

As used in the foregoing embodiments, the term "when" may be interpreted as a meaning of "if", "after", "in response to determining", or "in response to detecting" based on the context. Similarly, based on the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art can understand that all or some of the processes of the methods in the foregoing embodiments may be implemented by a computer program instructing related hardware. The program may be stored in a computer-readable storage medium. When the program is executed, the processes in the foregoing method embodiments may be included. The storage medium includes any medium that can store program code, such as a ROM, a random access memory RAM, a magnetic disk, or an optical disc.

## Claims

1. A delay information management method, comprising:
obtaining first delay information of a first granularity, wherein
the first delay information is determined based on a first threshold and a first parameter, and the first parameter is related to delay information of a data packet of the first granularity; or
the first delay information is determined based on a second parameter, and the second parameter is related to delay information of a data packet of the first granularity.

2. The method according to claim 1, wherein the first parameter comprises at least one of the following:
delay information of each data packet of the first granularity;
delay information of at least one data packet of the first granularity;
delay information of an earliest-arriving data packet of the first granularity;
delay information of a start data packet of the first granularity;
delay information of an end data packet of the first granularity;
delay information of any data packet of the first granularity;
a maximum value of delay information of data packets of the first granularity;
an average value of delay information of data packets of the first granularity;
a maximum value of delay information of an earliest-arriving data packet of the first granularity;
a maximum value of a plurality of pieces of maximum delay information of the first granularity;
a maximum value of a plurality of pieces of any delay information of the first granularity; or
a maximum value of a plurality of pieces of average delay information of the first granularity.

3. The method according to claim 1, wherein the second parameter comprises at least one of the following:
average remaining delay information of the first granularity;
minimum remaining delay information of the first granularity;
any remaining delay information of the first granularity;
a median of a plurality of pieces of remaining delay information of the first granularity;
a minimum value of average remaining delay information of the first granularity;
a minimum value of minimum remaining delay information of the first granularity; or
a minimum value of any remaining delay information of the first granularity.

4. The method according to claim 1, wherein the first delay information comprises at least one of the following:
a minimum value obtained by subtracting the first parameter from the first threshold;
an average value obtained by subtracting the first parameter from the first threshold;
any value obtained by subtracting the first parameter from the first threshold;
the first threshold minus the first parameter; or
the second parameter.

5. The method according to claim 1, wherein the method further comprises:
starting a first timer after the data packet of the first granularity is received.

6. The method according to claim 5, wherein the method further comprises:
learning that transmission of the data packet is completed or segmented transmission of the data packet is completed; or
obtaining second indication information, wherein the second indication information is used for indicating transmission of timer duration of the data packet of the first granularity, or indicating triggering of reporting of delay information; or
triggering reporting of delay information; and
stopping the first timer corresponding to the data packet.

7. The method according to claim 6, wherein the learning that transmission of the data packet is completed or segmented transmission of the data packet is completed specifically comprises at least one of the following:
learning that the data packet has been transmitted;
learning that the data packet has been sent;
learning that the data packet is successfully transmitted;
learning that at least one piece of segmented data of the data packet has been transmitted;
learning that at least one piece of segmented data of the data packet has been sent; or
learning that at least one piece of segmented data of the data packet is successfully transmitted.

8. The method according to claim 1, wherein the method further comprises:
transmitting the first delay information, or transmitting the first delay information and first granularity information.

9. The method according to claim 8, wherein the method further comprises:
determining whether a first uplink resource used for reporting first indication information is obtained, wherein
the first indication information is used for indicating a value or a value range of second delay information, and the second delay information is determined based on the first delay information, or is determined based on the first delay information and a waiting delay of the first uplink resource; and
reporting the first indication information when it is determined that the first uplink resource is obtained.

10. The method according to claim 1, wherein the data packet of the first granularity comprises at least one of the following:
a protocol data unit PDU; or
a service data unit SDU.

11. The method according to claim 5, wherein the method further comprises:
starting a second timer after the data packet of the first granularity is received.

12. The method according to claim 11, wherein the method further comprises:
obtaining duration of a first timer corresponding to a first data packet and/or duration of a second timer corresponding to the first data packet; and
transmitting the duration of the first timer for the first data packet, or transmitting the duration of the first timer for the first data packet and the duration of the second timer for the first data packet.

13. The method according to claim 12, wherein the method further comprises:
when a first condition is met, obtaining the duration of the first timer corresponding to the first data packet and/or the duration of the second timer corresponding to the first data packet, wherein
the first condition comprises at least one of the following:
the first data packet has been transmitted;
second indication information is obtained, wherein the second indication information is used for indicating timer duration for transmitting the first data packet, or indicating triggering of reporting of delay information; or
reporting of delay information is triggered.

14. The method according to claim 12, wherein the method further comprises:
obtaining delay information of the first data packet, wherein
the delay information of the first data packet is determined based on the duration of the first timer for the first data packet and the duration of the second timer for the first data packet.

15. The method according to any one of claims 11 to 14, wherein the method further comprises:
when a second condition is met, deleting duration of a timer corresponding to the first data packet, or stopping a timer corresponding to the first data packet, wherein
the second condition comprises one or more of the following:
it is learned that the first data packet has been transmitted;
it is learned that the first data packet has been sent;
it is learned that the first data packet is successfully transmitted;
it is learned that at least one piece of segmented data of the first data packet has been transmitted;
it is learned that at least one piece of segmented data of the first data packet has been sent;
it is learned that at least one piece of segmented data of the first data packet is successfully transmitted; or
it is learned that the duration of the timer corresponding to the first data packet has been transmitted.

16. A delay information management method, comprising:
obtaining first delay information of a first granularity, wherein
the first delay information is determined based on first time information and second time information, the first time information is determined based on timestamp information of arrival of a data packet of the first granularity, and the second time information is current timestamp information; or
the first delay information is first time information.

17. The method according to claim 16, wherein that the first time information is determined based on timestamp information of arrival of a data packet of the first granularity is specifically at least one of the following:
the first time information is determined based on a timestamp of an earliest-arriving data packet of the first granularity;
the first time information is determined based on a timestamp of each data packet of the first granularity;
the first time information is determined based on a timestamp of any data packet of the first granularity;
the first time information is determined based on an earliest timestamp of a data packet of the first granularity;
the first time information is determined based on any timestamp of a data packet of the first granularity;
the first time information is determined based on a median of timestamps of data packets of the first granularity;
the first time information is determined based on a timestamp of a start data packet of the first granularity;
the first time information is determined based on a timestamp of an end data packet of the first granularity; or
the first time information is determined based on an average value of timestamps of all data packets of the first granularity.

18. The method according to claim 16, wherein the method further comprises:
after the data packet of the first granularity is received, recording a timestamp of the data packet.

19. The method according to claim 18, wherein the method further comprises:
transmitting the timestamp corresponding to the data packet.

20. The method according to claim 16, wherein the first time information comprises at least one of the following:
a system frame number, subframe information, slot information, and symbol information.

21. The method according to claim 16, wherein the method further comprises:
learning that transmission of the data packet is completed or segmented transmission of the data packet is completed; and
deleting or discarding the timestamp corresponding to the data packet.

22. The method according to claim 21, wherein the learning that transmission of the data packet is completed or segmented transmission of the data packet is completed specifically comprises at least one of the following:
learning that the data packet has been transmitted;
learning that the data packet has been sent;
learning that the data packet is successfully transmitted;
learning that at least one piece of segmented data of the data packet has been transmitted;
learning that at least one piece of segmented data of the data packet has been sent; or
learning that at least one piece of segmented data of the data packet is successfully transmitted.

23. An indication information transmission method, comprising:
indicating first information when it is learned that transmission of a data packet of a first granularity is completed, wherein the first information is used for indicating at least one of the following information:
that transmission of the data packet is completed;
indicating to stop a timer corresponding to the data packet; or
deleting or discarding a timestamp corresponding to the data packet.

24. The method according to claim 23, wherein the indicating first information when it is learned that transmission of a data packet of a first granularity is completed specifically comprises at least one of the following:
indicating the first information when it is learned that the data packet has been transmitted;
indicating the first information when it is learned that the data packet has been sent;
indicating the first information when it is learned that the data packet is successfully transmitted;
indicating the first information when it is learned that at least one piece of segmented data of the data packet has been transmitted;
indicating the first information when it is learned that at least one piece of segmented data of the data packet has been sent; or
indicating the first information when it is learned that at least one piece of segmented data of the data packet is successfully transmitted.

25. A delay information sending method, comprising:
learning whether a first uplink resource is available for sending first indication information; and
sending or obtaining the first indication information when the first uplink resource is obtained and a result of a logical channel priority is met, wherein
the first indication information is used for indicating delay information of a second granularity, the delay information comprises second delay information of a first granularity or third time information of the first granularity, and the first indication information indicates at least one of the following: a value of the second delay information, a value of the third time information, a value range of the second delay information, or a value range of the third time information.

26. The method according to claim 25, wherein the second granularity corresponds to at least one piece of delay information.

27. The method according to claim 25, wherein the second delay information is determined based on third delay information, or is determined based on the third delay information and a waiting delay of the first uplink resource, or is determined based on the third time information and a timestamp at which the first uplink resource is obtained.

28. The method according to claim 25, wherein the second granularity comprises at least one of the following:
a radio link control protocol layer RLC entity, an RLC entity group comprising a plurality of RLC entities, a logical channel LCH, an LCH group comprising a plurality of LCHs, a PDU set, and a data burst data burst.

29. The method according to claim 28, wherein when the second granularity is an RLC entity, the first granularity comprises at least one of the following: an LCH, a data burst, and a PDU set;
when the second granularity is a data burst, the first granularity comprises a PDU set;
when the second granularity is an LCH, the first granularity comprises at least one of the following: a data burst and a PDU set;
when the second granularity is an RLC entity group, the first granularity comprises at least one of the following: an RLC entity, an LCH, a data burst, and a PDU set; or
when the second granularity is an LCH group, the first granularity comprises at least one of the following: an LCH, a data burst, and a PDU set.

30. The method according to claim 25, wherein the first indication information further comprises: a data format of the first indication information, first granularity information, cache data volume information, and a reserved field, wherein the data format of the first indication information is identified by a first identifier, and the first identifier is a logical channel identifier LCID, used for identifying a logical channel corresponding to the first indication information.

31. An electronic device, which is user equipment and comprises: one or more processors, one or more memories, and a radio frequency transmit channel, wherein the one or more memories are coupled to the one or more processors, the one or more memories are configured to store computer program code, the computer program code comprises computer instructions, and when the one or more processors execute the computer instructions, the electronic device performs the method according to any one of claims 1 to 30.

32. An electronic device, which is a network device and comprises: a processor and a transceiver that is internally connected to and communicates with the processor, wherein the transceiver is configured to receive code instructions and transmit the code instructions to the processor, and the processor is configured to run the code instructions to enable the electronic device to perform the method according to any one of claims 1 to 30.

33. A chip or a chip system, comprising a processing circuit and an interface circuit, wherein the interface circuit is configured to receive code instructions and transmit the code instructions to the processing circuit, and the processing circuit is configured to run the code instructions to perform the method according to any one of claims 1 to 30.

34. A computer-readable storage medium, comprising computer instructions, wherein when the computer instructions are run on an electronic device, the electronic device is enabled to perform the method according to any one of claims 1 to 30.
